(19) Europäisches Patentamt
European Patent Office
Office européen des brevets

(11) **EP 1 740 457 B1**

(12) **FASCICULE DE BREVET EUROPEEN**

(45) Date de publication et mention
de la délivrance du brevet:
**31.03.2010 Bulletin 2010/13**

(21) Numéro de dépôt: **05757126.7**

(22) Date de dépôt: **15.04.2005**

(51) Int Cl.:
***B64G 1/64*** *(2006.01)*

(86) Numéro de dépôt international:
**PCT/FR2005/000911**

(87) Numéro de publication internationale:
**WO 2005/110848 (24.11.2005 Gazette 2005/47)**

(54) **SATELLITE, PROCEDE ET FLOTTE DE SATELLITES D'OBSERVATION D'UN CORPS CELESTE**

SATELLIT, VERFAHREN UND SATELLITENFLOTTE ZUR BEOBACHTUNG EINES HIMMELSKÖRPERS

SATELLITE, METHOD AND A FLEET OF SATELLITES FOR OBSERVING A CELESTIAL BODY

(84) Etats contractants désignés:
**AT BE BG CH CY CZ DE DK EE ES FI FR GB GR HU IE IS IT LI LT LU MC NL PL PT RO SE SI SK TR**

(30) Priorité: **23.04.2004 FR 0404327**

(43) Date de publication de la demande:
**10.01.2007 Bulletin 2007/02**

(73) Titulaire: **CENTRE NATIONAL D'ETUDES SPATIALES**
**75039 Paris Cédex (FR)**

(72) Inventeur: **MASSONNET, Didier**
**F-31650 Saint-Orens (FR)**

(74) Mandataire: **Cabinet BARRE LAFORGUE & associés**
**95, rue des Amidonniers**
**31000 Toulouse (FR)**

(56) Documents cités:
**EP-A- 0 792 799      WO-A-99/22421**
**US-A- 3 220 004      US-A- 3 521 290**

**Description**

L'invention concerne un satellite d'observation destiné à être placé en orbite autour d'un corps céleste. Elle s'étend à un procédé d'observation d'un corps céleste à l'aide d'au moins un satellite selon l'invention, notamment à l'aide d'une flotte de satellites selon l'invention.

L'invention s'applique notamment à une observation dans le domaine de l'infrarouge, à une observation et dans le domaine du visible, à la radiométrie micro-ondes passive, à l'altimétrie et à l'imagerie radar de la Terre ou d'un autre corps céleste.

Les satellites connus d'observation dans le visible intègrent un système optique d'observation et des systèmes de contrôles d'attitude dits actifs. L'architecture fonctionnelle des systèmes de contrôle d'attitude actifs est répartie en deux systèmes : des capteurs de vitesse angulaire, d'écart angulaire... qui permettent d'obtenir des mesures pertinentes sur l'attitude du satellite selon trois axes de référence choisis pour le satellite, et des actuateurs qui induisent des couples autour des trois axes du satellite, permettant ainsi de le réorienter.

Par ailleurs, la précision du système optique est étroitement liée au positionnement correct des éléments optiques entre eux et par rapport à un bâti du satellite. Certains systèmes optiques embarqués, tels que ceux par exemple des satellites SPOT, comportent des éléments optiques dits actifs qui peuvent être réglés depuis le sol dans l'espace. Il est ainsi possible de modifier l'orientation de la visée du système optique par rapport au bâti du satellite. Ces systèmes sont lourds, encombrants et donc extrêmement coûteux. On leur préfère donc souvent, lorsque l'application le permet, des systèmes à éléments optiques dits passifs, c'est-à-dire réglés et fixés par rapport au bâti au sol, et dont la position ne peut pas être réglée en vol.

Le problème qui se pose alors est celui de la précision de réglage initial au sol et de la conservation de ce réglage lors des phases de décollage (pendant lesquelles le système doit pouvoir supporter de fortes accélérations, typiquement de 30 g ou plus en tenant compte des phénomènes vibratoires), puis dans l'espace en l'absence de gravité. Or, les solutions développées pour résoudre ce problème font intervenir des mécanismes de réglage très complexes pour permettre d'atteindre le seuil de résolution souhaité, tout en maintenant le système en un volume compact.

Les satellites d'observation connus sont complexes et donc coûteux à produire. Ils pèsent par ailleurs plusieurs centaines de kilogrammes. Leur mise en orbite est en conséquence, compte tenu de l'enjeu financier et du poids de la charge, une opération délicate et risquée qui nécessite l'emploi de lanceurs spécialisés et donc onéreux, tels qu'Ariane.

Typiquement, les systèmes satellitaires connus pour l'observation de la Terre emploient un petit nombre de satellites réalisant chacun une couverture journalière d'observation importante (cf. par exemple, le système Spot 4 (http://spot4.cnes.fr)). Ainsi, la panne d'un seul des satellites entraîne une perte fonctionnelle significative du système.

Il est à noter que le brevet US 3 521 290 décrit une structure d'antenne rétractable comprenant un organe annulaire de base, un support d'alimentation, et un réflecteur. Cette structure est être montée sur un satellite qui peut faire l'objet d'une stabilisation par une variété de techniques telles que par gradient de gravité, par jets pulsés ou stabilisation gyroscopique sans que la mise en oeuvre de ces techniques ne soit décrite. Un tel satellite est lourd et complexe.

L'invention vise à pallier ces inconvénients en proposant un satellite d'observation d'architecture simple, léger, dont les coûts de production et de mise en orbite sont faibles.

L'invention vise également à proposer un satellite d'observation adapté pour permettre le lancement à un coût faible, d'une flotte formée d'une multitude de tels satellites, notamment en un lancement unique ou en quelques lancements,

Pour ce faire, l'invention concerne un satellite d'observation selon la revendication 1.

Ainsi, le système d'acquisition ne nécessite pas de moyens spécifiques de positionnement et d'orientation par rapport à un bâti du satellite, ni de système de contrôle d'attitude complexe. Le dispositif réflecteur et le dispositif récepteur ont des masses appropriées et sont placés en position de fonctionnement suffisamment éloignés l'un de l'autre pour générer le couple nécessaire pour entraîner le système d'acquisition vers une orientation de visée par simple gradient de gravité résultant de ce système d'acquisition lui-même. On admet, selon les applications du satellite selon l'invention (météorologie, cartographie etc.), une tolérance dans l'orientation de visée prise par le satellite. Ainsi, il existe une gamme d'orientations de visée possibles proches d'une orientation idéale de visée et permettant de réaliser l'acquisition d'informations sur la zone visée avec un seuil de fidélité minimal requis. Le seuil de fidélité minimal requis dépend de l'application du satellite selon l'invention (météorologie, cartographie etc.).

L'invention permet de s'affranchir de tout bâti support. Ainsi, avantageusement et selon l'invention, le système d'acquisition ne s'appuie pas sur une structure rigide servant de bâti au satellite. Il est essentiellement constitué de sa charge utile, soit le système d'acquisition. Le satellite d'observation selon l'invention est donc léger et doté d'une architecture simple.

Un satellite selon l'invention peut présenter une configuration de stockage compacte dans un lanceur, diminuant significativement le coût de sa mise en orbite.

La stabilisation par gradient de gravité nécessite que le système d'acquisition possède, une fois déployé dans l'espace, une géométrie globalement très allongée axialement, généralement inappropriée au chargement dans un lanceur. Le système de liaison mécanique selon l'invention permet toutefois de replier le système d'acquisition dans l'état replié, faisant économie de l'espace disponible dans le lanceur. Plusieurs modes de réalisation de tels systèmes de liaisons mécaniques peuvent être envisagés : système télescopique, système de bras escamotable, système de liaison souple en flexion, etc.

Avantageusement et selon l'invention, le système de liaison mécanique est de type souple et non élastique en flexion et est adapté pour se tendre sous l'effet du gradient de gravité lorsque le satellite est placé en orbite, jusqu'à atteindre une configuration d'équilibre dans laquelle le dispositif d'acquisition est stabilisé dans l'état déployé.

Ainsi, le système d'acquisition se place automatiquement dans l'état déployé sous l'effet du gradient de gravité une fois éjecté du lanceur sans nécessiter d'intervention et/ou de mécanismes automatiques complexes.

Avantageusement et selon l'invention, le système de liaison mécanique comprend au moins trois suspentes filiformes, rigides en traction, souples et non élastiques en flexion, et ayant chacune deux extrémités, dont une première extrémité est fixée sur le dispositif réflecteur et dont une deuxième extrémité est fixée sur le dispositif récepteur, lesdites suspentes étant chacune fixées en des endroits distincts du dispositif réflecteur et du dispositif récepteur de façon à ce que :

- les assiettes du dispositif récepteur et du dispositif réflecteur puissent se stabiliser l'une par rapport à l'autre sous l'effet du gradient de gravité,
- les suspentes filiformes n'interceptent pas, lorsque le système d'acquisition est à l'état déployé, les rayonnements électromagnétiques provenant de la (des) surface(s) réfléchissante(s) et évoluant à destination du dispositif détecteur.

Avantageusement et selon l'invention, les suspentes filiformes sont constituées d'un ou plusieurs matériau(x) choisi(s) de façon que les longueurs des suspentes filiformes restent sensiblement constantes malgré les fluctuations thermiques qu'elles peuvent subir une fois le satellite placé en orbite.

Avantageusement et selon l'invention, les suspentes filiformes sont constituées en tout ou partie d'un ou plusieurs matériau(x) aptes à absorber au moins des rayonnements électromagnétiques appartenant au domaine spectral à observer, de sorte que ces suspentes ne génèrent aucune réflexion parasite sur le dispositif détecteur. Avantageusement et selon l'invention, les suspentes filiformes sont des chaînes.

Avantageusement et selon l'invention, le système de liaison mécanique comprend des moyens de réglage motorisés de la longueur d'au moins une des suspentes filiformes.

Ces moyens de réglage motorisés permettent d'effectuer un réglage fin de la position et/ou de l'orientation du dispositif récepteur par rapport au dispositif réflecteur afin de placer le dispositif réflecteur et le dispositif récepteur en position relative de fonctionnement. Avantageusement et selon l'invention, les moyens de réglage motorisés comportent au moins un actionneur piézoélectrique.

Avantageusement et selon l'invention, le satellite comprend une pluralité de caches aptes conjointement à masquer, lorsque le dispositif réflecteur et le dispositif récepteur sont en position relative de fonctionnement, le dispositif détecteur contre l'incidence directe de rayonnements électromagnétiques appartenant au domaine spectral à observer et provenant de sources extérieures au volume intérieur du système d'acquisition, géométriquement circonscrit par le(s) cache(s), le système de liaison mécanique, le dispositif réflecteur et le dispositif récepteur.

Ainsi, les rayonnements électromagnétiques reçus par le dispositif détecteur proviennent essentiellement de la zone visée.

Avantageusement et selon l'invention, le dispositif réflecteur comporte au moins un cache périphérique, dit gouttière, adapté pour s'étendre autour de la périphérie de la(des) surface(s) réfléchissante(s). Avantageusement et selon l'invention, le dispositif récepteur comporte au moins un cache, dit oeillère, s'étendant globalement vers le dispositif réflecteur lorsque le dispositif réflecteur et le dispositif récepteur sont en position relative de fonctionnement.

En particulier, selon un mode avantageux de réalisation de l'invention, l'oeillère limite le champ de vision du dispositif détecteur à un angle solide entourant la surface réfléchissante, tandis que la gouttière masque la totalité de la portion hors de la surface réfléchissante du champ de vision résultant.

Avantageusement et selon l'invention, le dispositif détecteur comporte au moins un organe détecteur comprenant au moins un détecteur choisi parmi les détecteurs à transfert de charge, les guides d'ondes, les microbolomètres. D'autres détecteurs peuvent être utilisés.

Avantageusement et selon l'invention, le satellite est caractérisé en ce que :

- au moins une surface réfléchissante est concave, symétrique de révolution autour d'un axe, dit axe du dispositif réflecteur, et adaptée pour observer une zone du corps céleste centrée sur l'axe du dispositif réflecteur,
- et l'organe détecteur est au moins sensiblement placé dans l'axe du dispositif réflecteur lorsque le dispositif réflecteur et le dispositif récepteur sont en position relative de fonctionnement.

En particulier, selon un mode de réalisation avantageux de l'invention, la surface réfléchissante du dispositif réflecteur est en forme de paraboloïde de révolution. Le fonctionnement du système d'acquisition s'apparente dans ce cas à celui d'un télescope de Newton. En effet, l'organe détecteur est au moins sensiblement placé à la focale du paraboloïde afin qu'il soit possible de réaliser l'acquisition d'informations. Cette position correspond à une position relative de fonctionnement du dispositif récepteur et du dispositif réflecteur.

En particulier, selon le mode préféré de réalisation, le système d'acquisition se place en une position de visée dans laquelle l'axe du dispositif réflecteur est à l'aplomb selon la verticale du corps céleste. La zone visée est alors celle que survole le satellite.

Avantageusement et selon l'invention, la surface réfléchissante étant en forme de paraboloïde de révolution, le rapport entre la distance focale et le diamètre de la surface réfléchissante est supérieur à 5.

Avantageusement et selon l'invention, le système d'acquisition comporte au moins un filtre bloquant des rayonnements infrarouges thermiques placé de façon à protéger l'organe détecteur de rayonnements infrarouges thermiques provenant du dispositif réflecteur.

Avantageusement et selon l'invention, le satellite comprend une alimentation électrique à cellules photovoltaïques. Avantageusement et selon l'invention, des cellules photovoltaïques sont disposées sur au moins une surface du dispositif réflecteur opposée à la(aux) surface(s) réfléchissante(s).

Avantageusement et selon l'invention, le satellite comprend au moins un cordon d'alimentation conducteur souple de longueur supérieure à celle du système de liaison mécanique à l'état déployé et reliant électriquement au dispositif récepteur des cellules photovoltaïques disposées sur le dispositif réflecteur.

Dans un mode de réalisation avantageux de l'invention, le satellite d'observation est exempt de pile et de batterie d'accumulateurs. Le système d'acquisition est donc actif seulement lorsque les cellules photoélectriques sont suffisamment exposées aux rayonnements électromagnétiques en provenance d'une source de lumière telle que le Soleil.

Avantageusement et selon l'invention, le satellite est caractérisé en ce que :

- le dispositif récepteur comprend un support sur lequel le dispositif détecteur est monté rotatif autour d'un axe, dit axe de détection,
- le dispositif détecteur comprend un dispositif motorisé d'orientation du dispositif détecteur autour de l'axe de détection.

En particulier, selon le mode préféré de réalisation, le dispositif motorisé d'orientation est adapté pour pouvoir régler la position angulaire de l'organe détecteur autour de l'axe de détection. Ceci permet, lorsque le système d'acquisition est dans une orientation de visée, de replacer l'organe détecteur en une position angulaire optimale d'acquisition par rapport à la trajectoire du satellite lorsqu'il quitte cette position.

Avantageusement et selon l'invention, le dispositif récepteur comprend un dispositif de suspension électromagnétique et/ou mécanique à frottement négligeable, du dispositif détecteur par rapport au support du dispositif récepteur.

Avantageusement et selon l'invention, le système d'acquisition comprend un dispositif, dit dispositif d'amortissement ou d'amplification, permettant l'amortissement ou l'amplification des oscillations du satellite en tangage et roulis, lorsque le dispositif réflecteur et le dispositif récepteur sont en position relative de fonctionnement.

Avantageusement et selon l'invention, le dispositif d'amortissement et d'amplification comprend un moteur apte à faire monter et descendre au moins une masse le long de l'axe de détection.

Avantageusement et selon l'invention, le satellite comprend un dispositif de télémesure apte à transmettre des informations acquises à une station de réception située à distance du satellite.

Avantageusement et selon l'invention, le dispositif d'acquisition comprend un dispositif de fixation provisoire du dispositif récepteur au sein d'une zone aveugle de la surface réfléchissante permettant de maintenir le système d'acquisition à l'état replié.

Avantageusement et selon l'invention, le système d'acquisition comprend des moyens aptes à le faire pivoter lorsque le dispositif réflecteur et le dispositif récepteur sont en position relative de fonctionnement, autour d'un axe transversal du système d'acquisition. Ainsi, on peut faire basculer le système d'acquisition dans une orientation de visée lorsque celui-ci s'est stabilisé par gradient de gravité dans une orientation en tête-bêche par rapport à celle-ci.

Avantageusement et selon l'invention, le dispositif réflecteur est adapté pour que la surface réfléchissante atteigne un équilibre géométrique fonctionnel en moins d'une demi-période de révolution autour du corps céleste lorsque le dispositif réflecteur subit un stress thermique causé par son passage d'un segment d'orbite en éclipse d'une source de rayonnement thermique vers un segment d'orbite exposé à ladite source.

Avantageusement et selon l'invention, la masse du satellite est inférieure à 10 kilogrammes.

L'invention s'étend à un procédé d'observation d'un corps céleste dans lequel :

- on place en orbite autour de ce corps céleste au moins un satellite selon l'invention,
- on laisse chaque satellite 1 s'orienter de lui-même par gradient de gravité.

Avantageusement et selon l'invention, on place, sur au moins une orbite, une flotte de plusieurs satellites.

Selon un mode de réalisation avantageux de l'invention, la flotte de satellites est composée d'une grande quantité de satellites, de l'ordre de plusieurs centaines, par exemple 200 satellites. Ainsi, la panne d'un satellite n'entraîne qu'une perte faible de la capacité d'observation de la flotte. L'invention permet ainsi de diminuer les risques sur l'investissement lié à l'exploitation d'une flotte de satellites selon l'invention.

Avantageusement et selon l'invention, chaque satellite est placé sur une orbite non géostationnaire, et on utilise un nombre suffisant de satellites adapté pour permettre statistiquement l'acquisition quotidienne d'informations d'observation sur toutes les portions d'au moins une zone de couverture du corps céleste par effet de saturation.

Avantageusement et selon l'invention, on laisse chaque satellite décrire une trajectoire orbitale naturelle sans correction active de cette trajectoire orbitale.

Avantageusement et selon l'invention, on utilise au moins un lanceur dans lequel on groupe une pluralité de satellites d'une flotte de satellites afin de les placer en orbite autour du corps céleste.

Le mode de réalisation préféré de l'invention prévoit le lancement de la flotte par groupes d'une dizaine de satellites à l'aide de petits lanceurs. Une vingtaine de missions de lancement est donc nécessaire pour placer une flotte de 200 satellites en orbite. Le coût total de ces missions de lancement est souvent plus faible que celui correspondant à l'emploi d'un seul lanceur classique tel que le lanceur Ariane. De plus, le risque de l'échec d'un petit lanceur, bien que souvent plus élevé que celui d'un lanceur unique spécialisé, n'est pas critique, contrairement à celui d'un lanceur unique spécialisé. En effet, le potentiel de pertes en quantité de satellites est plus faible qu'avec un lanceur unique spécialisé. L'invention permet ainsi de globalement diminuer le risque sur l'investissement lié au lancement de la flotte de satellites dans l'espace.

Avantageusement et selon l'invention, les dispositifs réflecteurs desdits satellites sont emboîtés les uns dans les autres en une pile sur un plateau d'un lanceur et les dispositifs récepteurs desdits satellites sont placés sur le plateau autour de la pile, chacun d'eux étant placé sur un dispositif d'éjection apte à le propulser en dehors du lanceur lors de la mise en orbite.

L'invention s'étend à une flotte de satellites selon l'invention placés sur au moins une orbite autour d'un corps céleste.

Une flotte selon l'invention est avantageusement caractérisée en ce que les satellites sont placés sur au moins une orbite non géostationnaire, et en ce que la flotte comprend un nombre de satellites adapté pour permettre statistiquement l'acquisition quotidienne d'informations d'observation sur toutes les portions d'au moins une zone de couverture du corps céleste par effet de saturation.

L'invention concerne en outre un satellite d'observation, un procédé et une flotte de satellites caractérisés en combinaison par tout ou partie des caractéristiques apparaissant ci-dessus ou ci-après.

D'autres buts, caractéristiques et avantages apparaissent à la lecture de la description suivante donnée à titre d'exemple non limitatif et qui se réfère aux figures annexées dans lesquelles :

- la figure 1 est une vue schématique représentant une flotte de satellites d'observation selon l'invention en cours de lancement et de mise en orbite,
- la figure 2 est une vue schématique en perspective d'un satellite d'observation selon l'invention dont le système d'acquisition est à l'état déployé et selon une orientation de visée idéale,

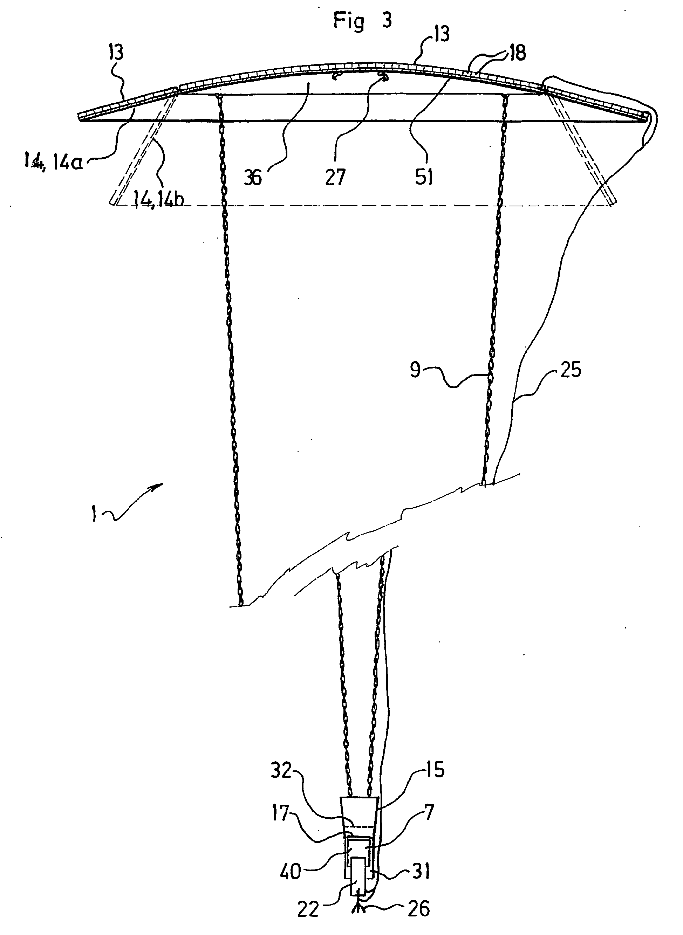

- la figure 3 est une vue schématique en coupe axiale du satellite de la figure 2,
- la figure 4 est une vue schématique en perspective illustrant un dispositif récepteur selon un exemple de réalisation d'un satellite selon l'invention,
- la figure 5 est une vue schématique en coupe axiale d'un satellite selon l'invention dont le système d'acquisition est à l'état replié selon un premier mode de mise en place pour son entreposage et/ou son chargement dans le lanceur en vue de son lancement,
- la figure 6 est un schéma de la chaîne cinématique des composants du dispositif récepteur,

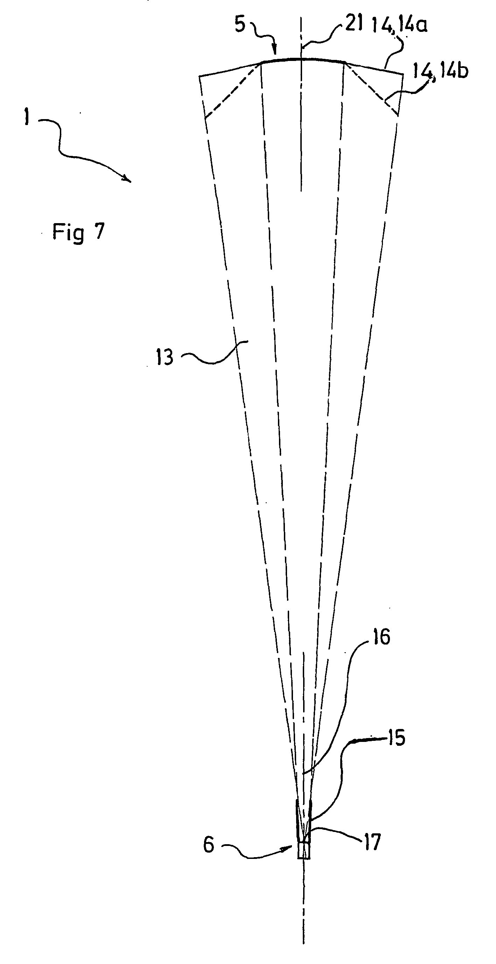

- la figure 7 est un schéma illustrant la géométrie générale du système d'acquisition à l'état déployé d'un satellite selon l'invention, où seuls sont représentés la surface réfléchissante, l'oeillère, la gouttière, le dispositif récepteur ainsi que l'organe détecteur,
- la figure 8 est une vue schématique en perspective d'un groupe de satellites selon l'invention à l'état replié, selon un deuxième mode de mise en place pour son chargement dans un lanceur en vue de son lancement,
- la figure 9 est un schéma en coupe axiale de la surface réfléchissante dans un mode de réalisation selon lequel la surface réfléchissante est en forme de paraboloïde de révolution, illustrant plusieurs paramètres géométriques et optiques de cette surface réfléchissante.

Il est à noter que tous les éléments constitutifs du satellite ne sont pas systématiquement représentés dans les figures et ce, à des fins de clarté.

Sur les figures, les échelles et les proportions ne sont pas respectées et ce, à des fins d'illustration et de clarté.

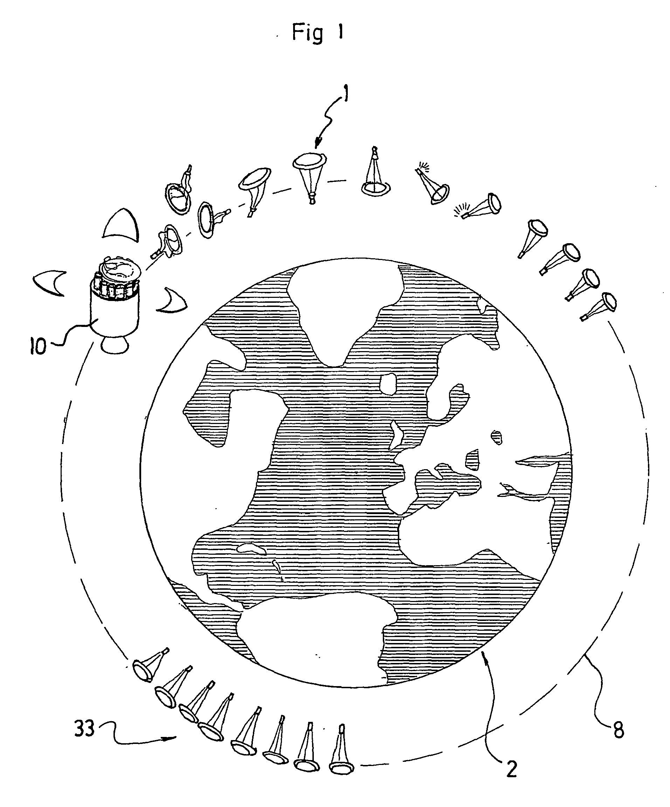

La figure 1 représente un corps céleste 2 ainsi que des satellites 1 placés ou en cours de lancement et de mise en orbite selon une orbite 8 autour du corps céleste 2, à l'aide d'un lanceur 10.

Le corps céleste 2 est, dans ce cas, la Terre mais peut néanmoins être, selon d'autres modes de réalisation, une autre planète, une étoile ou un corps céleste d'un autre type, du moment qu'il génère un champ de gravité suffisant pour permettre la stabilisation au moins partielle des satellites 1 par gradient de gravité comme décrit ci-après.

Une seule orbite 8 est représentée dans la figure 1. La flotte 33 de satellites 1 peut toutefois être répartie sur plusieurs orbites 8. L'orbite 8 peut par exemple être une orbite basse ou une orbite moyenne. Dans le cas de l'observation de l'essentiel des masses continentales hors Antarctique par exemple, les satellites 1 peuvent être placés sur des orbites 8 inclinées moyenne hauteur ou des orbites 8 inclinées basse hauteur.

Un seul lanceur 10 est représenté dans la figure 1. Il est toutefois à noter que rien n'empêche de placer plusieurs groupes de satellites 1 sur une même orbite 8 en plusieurs lancements successifs ou simultanés à l'aide de plusieurs lanceurs 10.

Les différentes phases de la mise en orbite du satellite 1, selon le mode de réalisation préféré de l'invention, sont représentées sur la figure 1. Le satellite 1 est tout d'abord éjecté du lanceur 10. Il s'oriente ensuite sous l'effet du gradient de gravité de façon à se stabiliser complètement ou partiellement, notamment à l'aide d'un système d'amortissement ou d'amplification des oscillations et par frottement dans l'atmosphère résiduelle tel que décrit ci-après, autour d'une position d'équilibre de façon à pouvoir faire l'observation du corps céleste 2. Cette position d'équilibre correspond à une orientation de visée idéale dans laquelle le système 3 d'acquisition pointe en direction du centre de masse du corps céleste 2. Une légère déviation angulaire du satellite 1 par rapport à cette orientation est toutefois tolérée. Il existe donc une gamme d'orientations de visée proches de l'orientation de visée idéale pour lesquelles le système 3 d'acquisition peut réaliser, sous condition d'une stabilisation suffisante tel que décrit ci-après, l'acquisition d'informations relatives à une zone du corps céleste 2 avec un degré de fidélité minimal requis par l'application de l'invention (cartographie, météorologie etc.).

Il peut arriver, tel qu'illustré dans la figure 1, que le satellite se stabilise par gradient de gravité autour d'une position d'équilibre inversée par rapport à l'orientation de visée idéale. Un dispositif 39 du satellite 1 permet alors, tel que décrit ci-après, de faire basculer le satellite 1 dans l'orientation souhaitée.

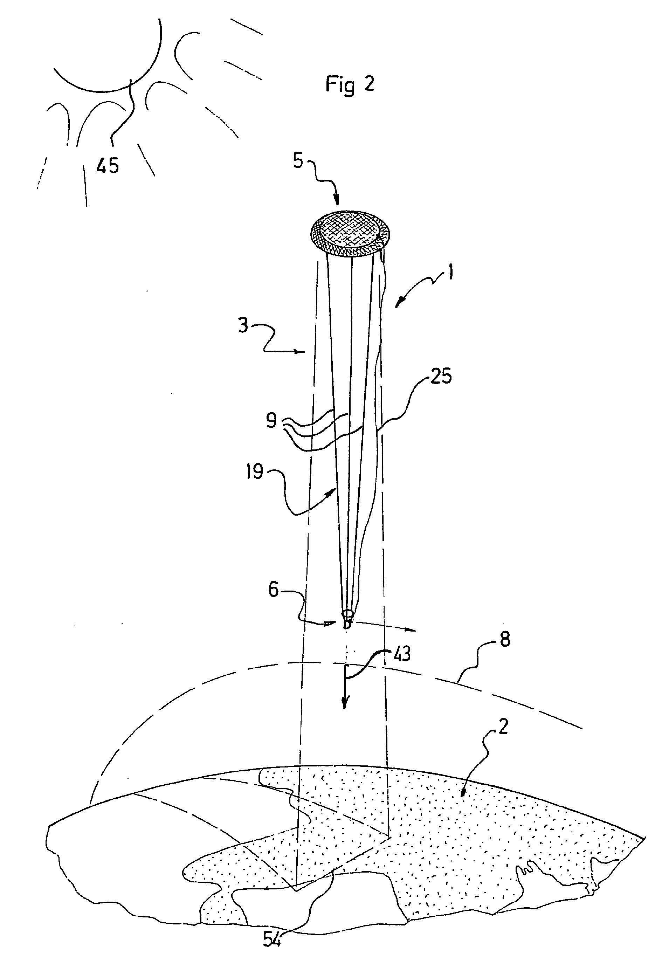

La figure 2 représente un satellite 1 d'observation selon l'invention réalisant l'observation du corps céleste 2 après avoir été placé en orbite.

Le satellite 1 d'observation est essentiellement constitué d'un système 3 d'acquisition. Il est dénué de plate-forme, structure ou bâti rigide, et ce contrairement aux satellites d'observation connus tels que SPOT 4. De ce fait, un satellite 1 selon l'invention est très léger.

Le système 3 d'acquisition d'informations comprend un dispositif 5 réflecteur doté d'une surface réfléchissante 36 adaptée pour pouvoir réfléchir des rayonnements électromagnétiques appartenant au domaine spectral à observer ; un dispositif 6 récepteur portant un dispositif 7 détecteur apte à acquérir les informations issues de rayonnements électromagnétiques 47, 48 appartenant au domaine spectral à observer ; et un système de liaison mécanique 19 qui amarre l'un à l'autre le dispositif 5 réflecteur et le dispositif 6 récepteur.

Le système 3 d'acquisition est caractérisé par sa capacité à être placé, tel que décrit ci-après, dans un état replié dans le lanceur 10 et à se déployer de lui-même lors de sa mise en orbite. Pour ce faire, le système de liaison mécanique 19 est de préférence souple afin qu'il se tende peu à peu jusqu'à une position d'équilibre sous la tension résultant d'un gradient de gravité entre le dispositif 6 récepteur et le dispositif 5 réflecteur. Le système 3 d'acquisition est alors à l'état déployé et est apte à réaliser l'acquisition d'informations.

Dans cet état déployé, le système 3 d'acquisition présente une forme très allongée notamment pour permettre son déploiement, sa stabilisation en position relative de fonctionnement, et selon une orientation de visée sous l'effet du gradient de gravité généré par le corps céleste 2. Il présente ainsi une direction longitudinale qui tend à s'aligner avec le gradient de gravité lorsqu'il est dans une orientation de visée.

La surface réfléchissante 36 est convergente de façon à présenter au moins une zone de focalisation des rayonnements électromagnétiques 47, 48. Le dispositif 7 détecteur est placé, lorsque le dispositif 6 récepteur et le dispositif 5 réflecteur sont en position relative de fonctionnement, au moins au voisinage de la zone de focalisation de la surface réfléchissante 36. Pour être convergente, la surface réfléchissante 36 est par ailleurs concave. Elle est de préférence symétrique de révolution autour d'un axe 21, dit axe 21 du dispositif réflecteur, qui constitue son axe optique.

Le dispositif réflecteur comprend un organe réflecteur, dit réflecteur parabolique 51, doté d'une face concave.

La face concave du réflecteur parabolique 51 est de préférence lisse et continue et en forme de paraboloïde de révolution. La surface réfléchissante 36 peut alors être réalisée par aluminisation de ladite face concave du réflecteur parabolique 51 pour une observation dans le domaine du visible. D'autres matériaux, tel que l'aluminium, peuvent être en alternative fixés sur la face concave du réflecteur parabolique 51 de façon à former une pellicule constituant une surface réfléchissante 36 apte à réfléchir des rayonnements électromagnétiques appartenant au domaine spectral à observer. Les matériaux employés pour réaliser cette pellicule peuvent être, selon le domaine spectral à observer, de type métallique, céramique ou autre.

Il n'est pas nécessaire de doter le dispositif 5 réflecteur d'une pellicule de matériau réflecteur dans le cas où le matériau constituant le réflecteur parabolique 51 est de lui-même apte à réfléchir les rayonnements électromagnétiques appartenant au domaine spectral à observer. Dans ce cas, la face concave du réflecteur parabolique 51 peut directement constituer la surface réfléchissante 36.

De plus, la face concave du réflecteur parabolique 51 peut être d'un autre aspect que celui, lisse et continu, préconisé pour l'observation dans le domaine visible. Dans le cas d'une observation dans le domaine des ondes radio par exemple, la face concave du réflecteur parabolique 51 peut être formée d'une structure grillagée, par exemple en matériau métallique.

Il est à noter que la surface réfléchissante 36 peut être dotée de toute autre structure susceptible de pouvoir réfléchir des rayonnements électromagnétiques appartenant au domaine spectral à observer vers le dispositif récepteur 5 de façon à permettre l'acquisition des informations à acquérir.

Le réflecteur parabolique 51 peut être par exemple en résine ou en tout autre matériau suffisamment rigide pour pouvoir maintenir la géométrie fonctionnelle de la surface réfléchissante 36 une fois le satellite 1 placé en orbite.

Le réflecteur parabolique 51 doit en outre présenter une inertie thermique aussi faible que possible de façon à ce que la surface réfléchissante 36 reprenne rapidement sa géométrie fonctionnelle suite à une fluctuation thermique. Le réflecteur parabolique 51 doit plus particulièrement permettre à la surface réfléchissante 36 de reprendre sa géométrie fonctionnelle en moins de temps qu'il ne faut au satellite 1 pour parcourir un segment d'orbite éclairé entre deux segments d'orbite en éclipse.

Pour réaliser l'observation du corps céleste 2, la surface réfléchissante 36 du satellite 1 doit être orientée vers la surface du corps céleste 2, de façon à capter le rayonnement électromagnétique montant issu du corps céleste 2. La visée du système 3 d'acquisition s'oriente naturellement en direction du corps céleste 2 sous l'effet du gradient de gravité.

Le système de liaison mécanique 19 est formé d'une pluralité de suspentes filiformes 9 reliées en l'une de leurs extrémités au dispositif 5 réflecteur à l'extérieur de la surface réfléchissante 36, par exemple à sa périphérie, afin d'éviter tout développement de contraintes parasites pouvant nuire à sa géométrie fonctionnelle. L'autre extrémité de chacune des suspentes filiformes 9 est reliée au dispositif 6 récepteur, de préférence sur un support 31 du dispositif 6 récepteur tel que décrit ci-après.

Le dispositif 6 récepteur comprend au moins un organe 17 doté d'au moins un détecteur adapté à l'observation d'un ou plusieurs types de rayonnements électromagnétiques d'intérêt. L'organe détecteur 17 est de préférence doté d'une pluralité de détecteurs disposés dans un plan, dit plan d'incidence, destiné à être placé orthogonalement à l'axe 21 du dispositif 5 réflecteur et à la focale de la surface réfléchissante 36. Le dispositif 5 réflecteur et le dispositif 6 récepteur sont alors en position relative de fonctionnement

De préférence, les détecteurs de l'organe détecteur 17 sont disposés en une rangée de détecteurs destinée à être orientée perpendiculairement à la trajectoire au sol du satellite 1 lorsque le système 3 d'acquisition du satellite 1 est placé en position de visée. Cette configuration est notamment adaptée pour des applications de cartographie et d'imagerie de zones du corps céleste 2. La rangée de détecteurs peut en effet réaliser l'acquisition d'une image bidimensionnelle représentant une zone du corps céleste 2 par une observation en balayage de cette zone par survol du satellite 1 de cette zone. Dans le cas où la surface réfléchissante 36 est symétrique de révolution autour de l'axe 21 du dispositif réflecteur, les détecteurs sont de préférence répartis en nombre égal de part et d'autre d'un axe, dit axe 16 de détection, perpendiculaire au plan d'incidence. L'axe 16 de détection est destiné à s'aligner avec l'axe 21 du dispositif réflecteur lorsque le dispositif 5 réflecteur et le dispositif 6 récepteur sont en position relative de fonctionnement. L'axe 16 de détection et l'axe 21 du dispositif réflecteur sont adaptés pour s'aligner à un axe 43, dit axe 43 de visée, lorsque celui-ci est placé selon une orientation de visée.

En pratique, pour une observation du corps céleste 2 dans le visible par exemple, l'organe 17 détecteur peut être un dispositif à transfert de charge, dit barrette CCD, comportant au moins une rangée de détecteurs à transfert de charge, dits détecteurs CCD.

Il est à noter que les détecteurs de l'organe 17 détecteur peuvent être autres que des détecteurs CCD. Les détecteurs de l'organe 17 peuvent être de tout type adapté à un domaine spectral à observer tel que le domaine des micro-ondes ou encore le domaine des infrarouges.

Dans le cas d'une observation dans le domaine des micro-ondes (variante non représentée), l'organe détecteur comporte alors un ou plusieurs guides d'ondes faisant office de détecteurs. Ces guides d'ondes sont de dimensions adaptées aux longueurs d'ondes du rayonnement micro-onde à acquérir et de préférence en forme de cornet.

Les guides d'ondes sont maintenus solidaires entre eux par une structure rigide adaptée. Les guides d'ondes sont de préférence disposés en une rangée dans le plan d'incidence formant ainsi une batterie de guides d'ondes.

Dans le cas d'une observation dans le domaine des infrarouges (variante non représentée), les détecteurs de l'organe détecteur sont par exemple des microbolomètres.

Les détecteurs de l'organe 17 détecteur peuvent en outre être disposés en une ou plusieurs rangées ou en tout autre arrangement en fonction de la surface réfléchissante 36 et du type d'observation à réaliser, selon l'application.

Par exemple, la barrette CCD peut comporter plusieurs rangées de détecteurs à transfert de charge. Ces rangées sont de préférence disposées parallèlement l'une à l'autre sur le plan d'incidence de façon à pouvoir réaliser successivement l'acquisition de la même portion de zone survolée du fait du déplacement du satellite 1. Cette technique, communément appelée intégration TDI ou « time delay integration », permet d'obtenir un meilleur rapport signal/bruit qu'en acquisition simple avec une seule rangée de cellules.

Le dispositif 6 récepteur peut en outre comporter deux organes 17 détecteurs disposés de part et d'autre de l'axe 16 de détection de façon à présenter leurs rangées de détecteurs parallèlement les unes aux autres. Ceci permet d'obtenir une représentation bi-dimensionnelle stéréoscopique de la zone survolée du corps céleste 2 lorsque les rangées des détecteurs sont placées sensiblement perpendiculaires à la trajectoire au sol du satellite.1.

L'étude de la géométrie optique de la surface réfléchissante 36 permet de déterminer les dimensions générales du système 3 d'acquisition. Si f est la distance focale, et D le diamètre de la surface réfléchissante 36, le rapport ρ = f/D doit être suffisamment important pour, d'une part, permettre l'orientation et une stabilisation au moins partielle du satellite 1 par gradient de gravité en position de visée et, d'autre part, permettre une tolérance de défocalisation du plan d'incidence compatible avec l'efficacité de cette stabilisation et avec l'incertitude de longueur du système de liaison mécanique 19 employé. Un rapport p = f/D élevé permet d'employer un système de liaison mécanique présentant une incertitude en longueur importante tel qu'un système de liaison mécanique 19 décrit ci-après, c'est-à-dire souple de façon à permettre un chargement sous forme compacte dans le lanceur.

L'étude de la géométrie optique de la surface réfléchissante 36 permet de plus de déterminer la défocalisation d'un détecteur de l'organe 17 détecteur du fait de sa position d'observation décalée dans le plan d'incidence par rapport à l'axe 16 de détection.

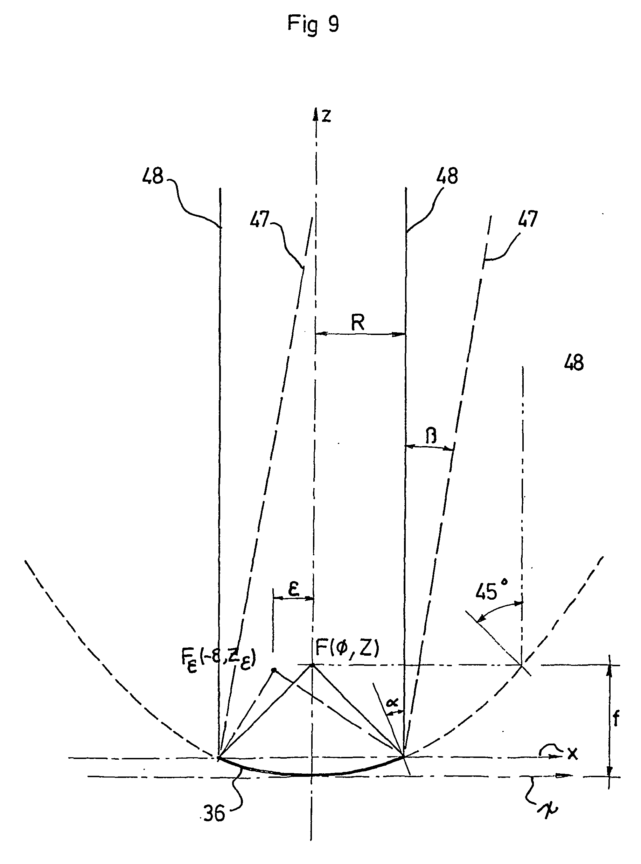

Le rapport p = f/D doit notamment être de l'ordre du rapport entre la taille des détecteurs de l'organe 17 détecteur et la longueur d'onde d'observation λ. La longueur d'onde d'observation λ peut ici être interprétée comme étant la longueur d'onde moyenne du rayonnement électromagnétique à observer. Les effets de défocalisation et les paramètres permettant le calcul du rapport p = f/D sont donnés ci-après en référence à la figure 9.

Soit une surface réfléchissante 36 parabolique de révolution de rayon R. Sa forme dans un plan axial est donnée par :

$$z(x) = px^2$$

Tous les rayonnements incidents 48 parallèles à l'axe optique de la surface réfléchissante 36. convergent au foyer F de la surface réfléchissante 36. Dans l'hypothèse où la pente à l'ouverture R est de 45°, la hauteur z maximale de la surface réfléchissante 36 correspond à la hauteur f du foyer F (car les rayons touchant le bord extérieur reviennent à l'horizontale). Dans ce cas :

$$\frac{d}{dx}\, z(x) = 2px = 1$$

ainsi :

$$f = z\left(\frac{1}{2p}\right) = \frac{1}{4p}$$

Un paramètre important du paraboloïde est son ouverture relative ρ:

$$\rho = f/D = \frac{f}{2R}$$

L'angle α de la tangente en bord de paraboloïde est donné par :

$$\frac{dz}{dx}(R) = 2\rho R = \frac{R}{2f} = \frac{1}{4\rho} = \tan(\alpha)$$

En changeant l'origine des ordonnées en la prenant à partir du bord du paraboloïde, on a :

$$Z = \frac{R}{\tan(2\alpha)}$$

Le point F, d'abscisse 0 (sur l'axe du paraboloïde) et d'ordonnée Z, est la focale de la surface réfléchissante 36. Le plan d'incidence de l'organe 17 détecteur est donc sensiblement placé à la distance Z de la surface réfléchissante 36 lorsque le dispositif 5 réflecteur et le dispositif 6 récepteur sont en position relative de fonctionnement.

Un rayonnement réfléchi issu d'un rayonnement incident 47 dévié d'un angle β par rapport au rayonnement axial 48, se focalise en un point Fε distinct du point F. Le point Fε présente effectivement un décalage latéral de valeur ε. De même, la hauteur de croisement n'est plus tout à fait Z, mais Zε, on a, par trigonométrie élémentaire :

$$\varepsilon = R\, \frac{\sin(2\beta)}{\sin(4\alpha)}$$

Par ailleurs,

$$Z - Z\varepsilon = \frac{R}{\tan(2\alpha)} - \frac{R + \varepsilon}{\tan(2\alpha + \beta)}$$

En développant cette équation au deuxième ordre en $\beta$, nous obtenons une équation de la forme :

$$Z - Z\varepsilon = c\beta^2$$

où c représente une constante réelle.

Cette formule donne la défocalisation $Z-Z\varepsilon$ pour une observation en une position décalée dans le plan d'incidence par rapport à l'axe 16 de détection lorsque le plan d'incidence est à la focale. Cette défocalisation $Z-Z\varepsilon$ est de valeur maximale pour un détecteur en bout de rangée de l'organe 17 détecteur. Ce détecteur est alors en une position en décalage latéral de valeur $\varepsilon_{max}$ par rapport à l'axe 16 de détection.

Le décalage latéral de valeur $\varepsilon_{max}$ représente ainsi la demi-longueur de la rangée de détecteurs en fonction d'un pouvoir résolvant de valeur $\beta$ souhaité. Si la longueur d'onde observée est $\lambda$ et l'ouverture de la surface réfléchissante est D = 2R, le pouvoir résolvant est :

$$\beta \approx \frac{\lambda}{2R}$$

L'écart d'observation hors axe pour un tel pouvoir résolvant est :

$$\varepsilon_{max} \approx \frac{\lambda}{\sin(4\alpha)} = \lambda \frac{(16\,\rho^2 + 1)^2}{16\,\rho\,(16\,\rho^2 - 1)}$$

Comme p est en général supérieur à 4, les unités sont négligeables, et $\varepsilon_{max} \approx \rho\lambda$.

Par exemple, on peut choisir un rapport p = f/D de 10 pour une longueur d'onde 0,5 microns et une taille de détecteur de 5 microns. Si un organe 17 détecteur comprend une rangée de n = 1000 détecteurs, il est alors possible de travailler avec 500 détecteurs de part et d'autre de l'axe 16 de détection. La défocalisation $Z-Z\varepsilon$ est éventuellement compensée par un dispositif optique de correction (non représenté) placé à proximité de l'organe détecteur.

Pour un télescope d'observation de la Terre aussi simple que possible, mais doté de capacités submétriques, on choisit par exemple un réflecteur parabolique 51 doté d'une surface réfléchissante 36 d'environ 50 cm de diamètre, avec une focale de 5 mètres (pour respecter le rapport entre longueur d'onde utile et taille de l'organe 17 détecteur).

Par exemple, le dispositif 7 détecteur peut comporter une ou plusieurs barrette(s) de 36 mm constituée(s) chacune de 6 000 détecteurs de 6 microns aboutés. Avec un focale de 5 m, la tolérance sur la longueur de chaque suspente filiforme 9 peut atteindre 50 microns. Une telle variation de distance peut être le résultat par exemple d'un défaut de rectitude de l'ordre de 1 cm dans la partie médiane de la suspente filiforme 9. La force de tension T exercée sur les suspentes filiformes 9 due au gradient de gravité est donnée par :

$$T = gm\frac{R^2\,h}{(R + H)^2\,R}$$

où h est la distance entre le centre de masse du dispositif 5 réflecteur et le centre de masse du dispositif 6 récepteur, m la masse du satellite 1, g l'accélération à la surface de la Terre, R le rayon de la Terre et H l'altitude de vol.

Cette force est beaucoup plus faible qu'au sol. Par exemple, pour une orbite de l'ordre de 1000 à 2000 kilomètres d'altitude, la tension T est typiquement de l'ordre de 1 000 000 de fois plus faible qu'au sol. Une telle tension correspond à des constantes de temps 1 000 fois plus grandes. Ainsi, la période d'oscillation libre du pendule constitué par le satellite 1 est de l'ordre de 30 min.

Les suspentes filiformes 9 doivent être rigides en traction (c'est-à-dire présenter une élasticité négligeable en traction), souples et non élastiques en flexion (c'est-à-dire présenter une rigidité négligeable en flexion). De préférence, elles sont également souples et non élastiques en torsion au moins dans une certaine gamme d'amplitude angulaire et leurs propriétés en compression n'ont pas d'importance dans le cadre de l'invention. En tout état de cause, les suspentes filiformes 9 doivent pouvoir amarrer l'un à l'autre le dispositif 5 réflecteur et le dispositif 6 récepteur en les maintenant en position relative de fonctionnement sous l'effet du gradient de gravité, sans générer de contraintes parasites. En pratique, les suspentes filiformes 9 peuvent être formées de chaînes, de câbles ou de fils en matériaux adaptés.

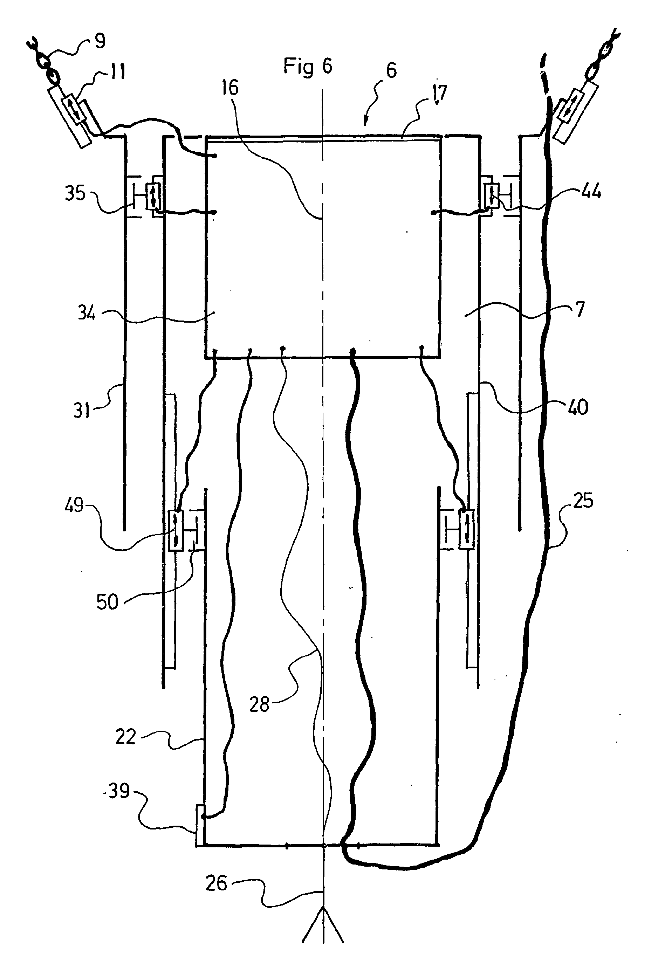

Les suspentes filiformes 9 sont formées d'un ou plusieurs matériaux choisis de préférence pour présenter une inertie thermique la plus faible possible. Par exemple, les suspentes filiformes 9 sont formées, tel que représenté à la figure 6, de chaînes dont les maillons sont en céramique présentant une excellente rigidité en traction et une très faible inertie thermique. De la sorte, une différence d'exposition aux rayonnements thermiques entre les suspentes filiformes 9 ne nuit pas à l'équilibre de l'ensemble et au maintien du dispositif 5 réflecteur et du dispositif 6 récepteur en position relative de fonctionnement.

De préférence, les suspentes filiformes 9 sont de plus formées d'un ou plusieurs matériaux adaptés pour absorber les rayonnements électromagnétiques appartenant au domaine spectral à observer, de façon à éviter qu'elles ne réfléchissent sur l'organe détecteur 17 des rayonnements électromagnétiques parasites.

Il est à noter que la réalisation des suspentes filiformes 9 sous forme de chaînes permet de réduire toute rigidité résiduelle en flexion, en torsion (du moins dans une certaine gamme d'amplitude angulaire) et en compression. Les chaînes dissipent également plus facilement une énergie mécanique excédentaire. Elles s'emmêlent plus difficilement lorsque le satellite 1 est à l'état replié tel que décrit ci-après. Une chaîne possède en outre une structure plus fiable dans la mesure où chacun des maillons possède deux brins. La rupture de l'un des brins n'entraîne pas nécessairement la rupture de la suspente 9.

De préférence, les maillons de la chaîne comportent chacun deux couteaux, chaque couteau étant formé d'une arête saillante située dans une portion intérieure de la boucle du maillon. Les couteaux sont disposés de part et d'autre du maillon de façon à présenter leurs arêtes parallèlement l'une à l'autre. Ainsi, deux couteaux de deux maillons distincts se croisent en un contact sensiblement ponctuel à chaque articulation de maillons successifs d'une chaîne lorsqu'elle est soumise à une contrainte en tension. Ceci permet de diminuer l'incertitude relative à la longueur fonctionnelle des maillons de la chaîne par rapport à celle de maillons classiques dont l'articulation entre deux maillons s'effectue en une zone de contact plus irrégulière. La longueur fonctionnelle des maillons formant les suspentes 9 selon l'invention correspond ainsi à la distance entre les deux arêtes saillantes formant les couteaux de chaque maillon.

On admet, selon les applications (météorologie, cartographie etc.) du satellite selon l'invention, et le degré de fidélité d'acquisition qu'elles requièrent, une tolérance de défocalisation du plan d'incidence et de défaut d'alignement de l'axe 21 du dispositif réflecteur et de l'axe 16 de détection. Il existe donc une gamme de positions relatives du dispositif 6 récepteur par rapport au dispositif réflecteur 5 correspondant à une position relative de fonctionnement. Il suffit effectivement que le plan d'incidence soit placé suffisamment près de la focale et que l'axe 16 de détection soit suffisamment aligné avec l'axe 21 du dispositif réflecteur 5 pour permettre de réaliser l'acquisition des informations, c'est à dire de réaliser une acquisition atteignant un seuil de fidélité minimal requis par l'application (météorologie, cartographie etc.).

Il est à noter que l'incertitude sur la longueur des suspentes 9 doit être suffisamment faible pour que le dispositif réflecteur 5 et le dispositif 6 récepteur puissent être placés en une position relative de fonctionnement comme décrit ci-dessus.

Ainsi, les maillons constituant les suspentes 9 doivent être formés d'un ou plusieurs matériaux dotant les maillons d'une rigidité adaptée pour qu'ils ne se déforment sensiblement pas, ni de façon plastique, ni de façon élastique, sous la tension résultant du gradient de gravité stabilisant en orbite le satellite 1 selon l'invention. En particulier, les couteaux des maillons doivent être suffisamment rigides pour prévenir qu'ils ne s'émoussent et se déforment sous la tension des suspentes filiformes 9 une fois le satellite 1 placé en orbite.

La bordure du réflecteur parabolique 51 peut être d'une forme adaptée pour présenter un renflement périphérique de fixation (non représenté dans les figures) sur lequel peuvent être fixées les suspentes filiformes 9. Le renflement de fixation doit être suffisamment rigide pour prévenir une déformation de la surface réfléchissante 36 malgré les contraintes subies sous la tension des suspentes filiformes 9 une fois le satellite selon l'invention placé en orbite. De préférence, les maillons situés à l'extrémité de chaque suspente 9 du côté du dispositif 5 réflecteur sont fixés au renflement de fixation du réflecteur parabolique 51 par l'intermédiaire d'anses de fixation (non représentées sur les figures) solidaires dudit renflement de fixation. Les anses de fixation peuvent être formées dans la matière du réflecteur parabolique 51. En alternative, elles peuvent y être fixées, par exemple à l'aide de colle ou d'une soudure. Les anses peuvent, similairement aux maillons des chaînes constituant les suspentes filiformes 9, comporter un couteau de façon à minimiser la défocalisation de l'organe 17 détecteur en regard de la surface réfléchissante 36. Les maillons en bout de suspente 9 peuvent en alternative être directement soudés ou collés au réflecteur parabolique 51. Dans le cas où le réflecteur parabolique 51 est en résine, les maillons peuvent être noyés dans la masse du renflement de fixation du réflecteur parabolique 51.

Les suspentes filiformes 9 sont de préférence fixées au support 31 par l'intermédiaire d'une liaison pivot, d'une liaison rotule libre ou de toute autre liaison évitant le développement de contraintes parasites dans les suspentes filiformes 9 et le support 31. Chaque suspente filiforme 9 peut, par exemple, être fixée sur une anse du support 31.

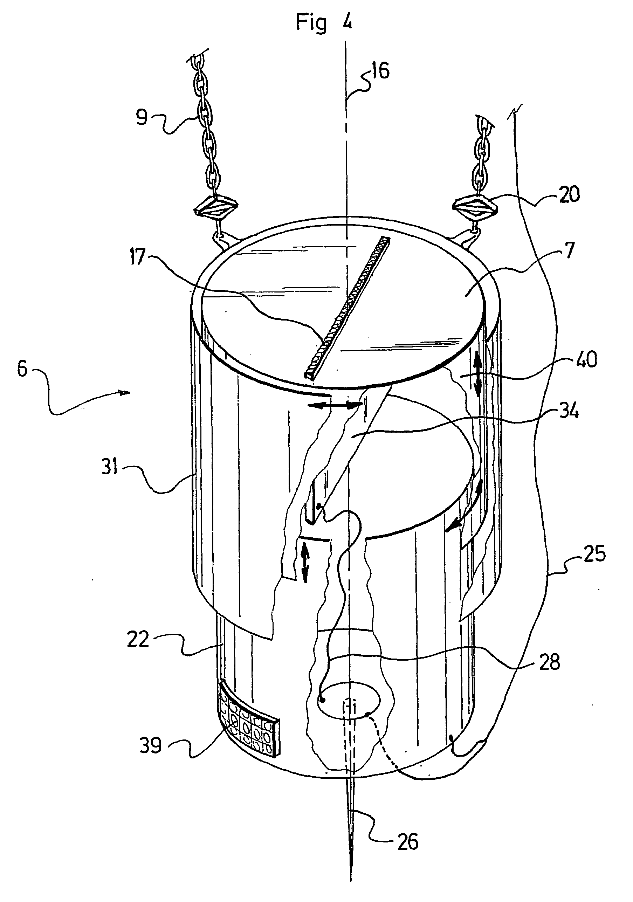

En combinaison, l'extrémité libre de chaque suspente filiforme 9 peut être reliée au support 31 du dispositif 6 récepteur par l'intermédiaire d'un actionneur 11 linéaire motorisé de réglage, par exemple un actionneur linéaire piézoélectrique 20 exempt de pièces à frottement dynamique tel que décrit par WO 02/084361. Un tel actionneur piézoélectrique 20 peut également être interposé en tout endroit de la longueur de la suspente filiforme 9, voire même entre l'extrémité supérieure de la suspente filiforme 9 et sa liaison au réflecteur parabolique 51. Chaque actionneur linéaire piézoélectrique 20 est commandé à partir d'une carte électronique 34 à laquelle il est de préférence relié par un fil conducteur électrique (représenté figure 6 mais non figure 4). Les actionneurs linéaires piézoélectriques 20 sont de préférence commandés à partir de la carte électronique reliée au dispositif 7 détecteur telle que décrite ci-après.

La longueur de chaque suspente filiforme 9 peut être individuellement ajustée de façon à permettre l'alignement précis de l'axe 16 de détection avec l'axe 21 du dispositif réflecteur en orbite. Un ajustement simultané de la longueur de toutes les suspentes filiformes 9 permet également de faire varier la distance qui sépare le dispositif 7 détecteur de la surface réfléchissante 36. Il est ainsi possible de corriger la position du dispositif 6 récepteur par rapport au dispositif 5 réflecteur afin de les placer en une position relative de fonctionnement

Chaque actionneur linéaire piézoélectrique 20 peut être rendu solidaire du support 31 par collage, soudure ou autre moyen de fixation adapté. Le support 31 est globalement symétrique de révolution autour de l'axe 16. Les actionneurs linéaires piézoélectriques 20 sont de préférence répartis de façon angulairement uniforme autour du support 31. Les suspentes filiformes 9 sont rendues solidaires des actionneurs linéaires piézoélectriques 20 par collage, soudure ou autre moyen de fixation adapté.

Le support 31 est par exemple formé d'un cylindre creux, d'une structure annulaire ou autre, et d'une douille 40 de montage également de préférence de forme cylindrique. Dans le cas ou l'organe détecteur 17 comprend une ou plusieurs rangées de détecteurs, la douille 40 comporte une forme adaptée pour porter l'organe détecteur 17 de façon à ce qu'il s'étende radialement par rapport à l'axe 16 de détection et orthogonalement à cet axe 16 de détection.

La douille de montage 40 est montée librement rotative par rapport au support 31 par le biais d'une liaison pivot sans frottement de façon à ce que l'évolution angulaire du dispositif 7 détecteur autour de l'axe 43 idéal de visée soit sensiblement indépendante de celle de l'ensemble formé du dispositif 5 réflecteur, du système de liaison mécanique 19, et du support 31. La liaison entre la douille de montage 40 et le support 31 peut être réalisée par un dispositif 35 de suspension présentant des frottements négligeables. Le dispositif 35 de suspension peut être par exemple de type roulement à billes ou roulement à rouleaux.

De préférence, le dispositif 35 de suspension est électromagnétique. Par exemple, une bague peut être montée autour de la douille de montage 40 de façon à s'étendre radialement et orthogonalement à l'axe 16 de détection dans une gorge formée entre deux butées annulaires montées solidaires du support 31 et s'étendant radialement et orthogonalement à l'axe 16 de détection autour de la douille de montage 40. La bague et les butées sont de préférence constituées de matériaux présentant chacun un dipôle magnétique permanent. L'orientation des dipôles de la bague et des butées est adaptée pour générer des forces magnétiques répulsives entre la bague de montage et les butées. Ces forces doivent être suffisantes pour maintenir la douille de montage 40 dans l'axe 16 de détection et l'organe 17 détecteur à la focale de la surface réfléchissante 36 sans contact entre ladite bague et lesdites butées.

Pour pouvoir réajuster la position de l'organe 17 détecteur dans le cas d'une défocalisation de celui-ci, ladite bague est de préférence montée coulissante sur la douille de montage de façon à pouvoir être déplacée le long de l'axe 16 de détection sous commande d'un moteur 44. Ceci permet d'effectuer des ajustements fins de la position de l'organe 17 détecteur à la focale de la surface réfléchissante 36. En pratique, ledit moteur 44 est de préférence électrique et solidaire de la douille de montage. Il entraîne un pignon engrainant sur une crémaillère solidaire de ladite bague. Ce système peut être employé en alternative ou en combinaison du système de réglage de la longueur des suspentes filiformes 9 à l'aide d'actionneurs linéaires motorisés de réglage 11 pour réaliser une action de focalisation de l'organe détecteur 17.

Le dispositif 6 récepteur comprend un dispositif motorisé d'orientation du dispositif 7 détecteur autour de l'axe 16 de détection. Ce dispositif motorisé d'orientation est adapté pour pouvoir régler la position angulaire de l'organe 17 détecteur autour de l'axe 16 de détection. Ceci permet, lorsque le système d'acquisition est en orientation de visée, de replacer l'organe 17 détecteur en une position angulaire optimale d'acquisition par rapport à la trajectoire du satellite lorsqu'il quitte cette position. Dans le cas où l'organe 17 détecteur comprend une rangée de détecteurs, la position optimale correspond la position dans laquelle la rangée de détecteurs est orthogonale à la trajectoire au sol du satellite 1. Le défaut d'orthogonalité peut être par exemple détecté par analyse d'une télémesure reçue au sol.

En pratique le dispositif motorisé d'orientation peut être réalisé à l'aide d'une pièce contrarotative 22 portée par la douille 40 en sa partie inférieure. Cette pièce contrarotative 22 est montée rotative par rapport à la douille 40 autour de l'axe 16 de détection. Un moteur électrique 50, dit moteur 50 de contrarotation, permet de faire tourner la pièce contrarotative 22 par rapport à la douille 40 de montage autour de l'axe 16 de détection. Ceci permet de réaliser une rotation de la douille 40 de montage par rapport au support 31 sans induire de couple sur le support 31. La liaison entre la douille 40 et la pièce contrarotative 22 présente de préférence le moins de frottement possible afin de minimiser l'énergie nécessaire au moteur 50 de contrarotation pour les entraîner relativement en rotation. En pratique, le moteur 50 de contrarotation peut être porté par la douille 40, et entraîner un pignon engrainant sur une couronne dentée solidaire de la pièce contrarotative 22.

Par ailleurs, la pièce contrarotative 22 est de préférence montée sur la douille 40 de façon à pouvoir coulisser parallèlement à l'axe 16 de détection selon une certaine amplitude, et ce, sous la commande d'un dispositif motorisé 49 apte à entraîner ces deux pièces en translation relative l'une par rapport à l'autre ou au contraire à amortir le mouvement de translation relative.

L'évolution en tangage et roulis du satellite 1 une fois placé en orbite peut être de nature pendulaire autour d'une position d'équilibre correspondant soit à une orientation de visée du satellite 1, soit à une orientation en tête bêche du satellite 1 par rapport à une orientation de visée.

Un amortissement peut être obtenu en faisant progressivement monter et descendre une masse périodiquement le long de l'axe 16 de détection du satellite. Ceci permet de varier entre deux valeurs, dites minimale et maximale, les moments d'inertie du satellite 1 selon les axes de roulis et tangage. Ce mouvement doit être effectué à une fréquence double de celle de l'oscillation pendulaire du satellite 1 de façon à ce que le moment d'inertie du satellite selon les axes de roulis et de tangage (l'axe de lacet correspondant à l'axe 16 de détection et à l'axe 21 du dispositif réflecteur) soit de valeur minimale lorsque l'oscillation du satellite 1 atteint l'amplitude maximale, et de façon à ce que ce moment d'inertie soit de valeur maximale lorsque le satellite repasse temporairement en position d'équilibre. Similairement, une amplification du mouvement pendulaire du satellite 1 est obtenue lorsque le mouvement périodique imprimé à la masse est tel que le moment d'inertie du satellite selon les axes de roulis et de tangage soit de valeur maximale lorsque l'oscillation du satellite 1 atteint l'amplitude maximale, et que ce moment d'inertie soit de valeur minimale lorsque le satellite repasse temporairement en position d'équilibre.

Ainsi, il est utile de pouvoir synchroniser le mouvement périodique de l'organe en regard de l'oscillation en tangage et/ou roulis du satellite. Plusieurs solutions peuvent être, pour ce faire, retenues. Il peut être par exemple prévu de déclencher le mouvement périodique de l'organe par télécommande à partir d'une station terrestre dotée d'un télescope permettant de relever directement l'évolution oscillatoire du satellite 1. En alternative, un capteur piézoélectrique 20 peut être fixé sur une des suspentes 9, de façon à pouvoir en relever la tension instantanée. Le traitement de cette mesure peut être effectué au sol ou à bord du satellite 1 par un système apte à déduire la phase d'oscillation pendulaire du satellite 1, et pouvant ainsi déclencher au moment opportun le mouvement périodique de la masse de façon à permettre soit un amortissement soit une amplification de l'oscillation en fonction de la télécommande reçue d'une station au sol.

Il est à noter que le système d'amortissement ou d'amplification tel que décrit précédemment ne permet pas d'amortir une oscillation en tangage et roulis si celle-ci se compose d'une pluralité de composantes pendulaires de phases distinctes, par exemple lorsque le satellite 1 décrit une oscillation circulaire autour de l'axe 43 de lacet. En effet, l'amortissement d'une composante pendulaire d'une telle oscillation à l'aide du système d'amortissement tel que décrit entraîne l'amplification d'une autre composante pendulaire déphasée par rapport à la première.

Pour bien des applications, notamment l'observation de la surface du corps céleste 2 dans le visible, une oscillation du système d'acquisition 3 en tangage et/ou roulis ne dépassant pas une amplitude de 5 degrés est acceptable compte tenu de la longue période d'oscillation du système d'acquisition 3 (de l'ordre de 30 minutes). En effet, l'effet de filé dû à l'oscillation du système d'acquisition pendant l'observation est alors négligeable et les informations obtenues atteignent alors un degré minimal de fidélité requis par l'application. Chacune des positions alors prises par le système d'acquisition 3 au cours d'une telle oscillation correspond à une orientation de visée.

Le système d'amortissement ou d'amplification peut ainsi être employé pour uniformiser l'amplitude d'oscillation des différentes composantes pendulaires de façon à ce que l'amplitude de l'oscillation résultante demeure en dessous d'une valeur seuil. Cette valeur seuil est déterminée selon le niveau de fidélité requis par l'application (cartographie, météorologie etc.). Dans le cas où les amplitudes des différentes composantes pendulaires sont trop importantes pour pouvoir confmer l'oscillation résultante sous la valeur seuil, il peut être attendu que l'oscillation du satellite 1 s'amortisse naturellement par frottement dans l'atmosphère résiduelle présente en orbite.

Le dispositif 7 détecteur comprend, sous la barrette de détecteurs CCD et à l'intérieur de la douille de montage 40, une carte électronique 34 reliée aux détecteurs de cette barrette pour en recevoir les signaux et les traiter en vue de l'acquisition des informations. L'électronique d'acquisition des informations ainsi que l'électronique permettant la gestion du satellite 1 lui-même et de ses fonctions de communication en télémesure et télécommande sont, de préférence, centralisées sur cette carte électronique 34.

Une antenne 26 d'un système de télémesure est portée à la partie inférieure de la pièce contrarotative 22. L'antenne 26 est ainsi avantageusement orientée vers le corps céleste 2 et les stations au sol. Des conducteurs électriques, par exemple au moyen d'un fil électrique 28, relient l'antenne 26 à la carte électronique 34. Cette antenne 26 permet d'envoyer les informations acquises, par exemple vers le corps céleste 2 en vue de leur exploitation. Elle peut également recevoir certaines fonctions de télécommande du satellite 1.

Le dispositif 5 réflecteur peut être doté, à l'opposé de la surface réfléchissante 36, d'une surface photovoltaïque 13 constituée de cellules photovoltaïques 18 aptes à recevoir de la lumière en provenance d'une source de lumière 45, telle que par exemple le soleil, et à fournir une énergie électrique au satellite 1 à partir de ce rayonnement lumineux. La surface photovoltaïque 13 est fixée sur le réflecteur parabolique 51 de façon à ce qu'elle s'expose à la source 45 lorsque la surface réfléchissante 36 est orientée vers le corps céleste 2.

Ainsi, la surface photovoltaïque 13 est de préférence accolée sur une face du réflecteur parabolique 51 opposée à la surface réfléchissante 36.

Les cellules photovoltaïques 18 sont, par l'entremise de la surface photovoltaïque 13, reliées par un cordon d'alimentation électrique 25 au dispositif 7 détecteur en vue de l'alimentation électrique de ce dernier. La longueur de ce cordon d'alimentation électrique 25 doit être suffisante pour ne pas interférer avec le fonctionnement optique du système 3 d'acquisition à l'état déployé. Sa masse et ses propriétés doivent être aussi adaptées pour ne pas perturber l'équilibre mécanique du satellite 1. Ce cordon d'alimentation électrique 25 est éventuellement doublé pour plus de fiabilité. En outre, la liaison électrique du cordon d'alimentation 25 à la surface photovoltaïque 13 peut être assurée au moyen d'une liaison rotule libre fixée dans l'axe 21 du dispositif réflecteur.

De préférence, le dispositif 6 récepteur est adapté pour limiter les postions angulaires prises par le dispositif 7 détecteur par rapport au support 31 du dispositif 6 récepteur à un éventail de positions angulaires ayant une amplitude maximale comprise entre 90 et 360 degrés. Ceci permet d'éviter que le cordon d'alimentation électrique 25 ne s'enroule autour du système 3 d'acquisition en conséquence d'une rotation du dispositif 7 détecteur par rapport au support 31. Des moyens de mesure de la position angulaire du dispositif 7 détecteur par rapport au support 31 peuvent être employés pour ce faire.

Un cache périphérique, dit gouttière 14, peut être prévu à la périphérie de la surface réfléchissante 36 de façon à empêcher ou limiter l'incidence de rayonnements électromagnétiques parasites provenant de sources autres que le corps céleste 2, sur le dispositif 7 détecteur et/ou sur la surface réfléchissante 36. Cette gouttière 14 est en forme générale de couronne de largeur constante selon la direction radiale et peut être constituée de tout matériau ayant des propriétés optiques appropriées vis-à-vis du rayonnement électromagnétique à masquer. La gouttière est adaptée pour masquer au moins les rayonnements électromagnétiques susceptibles d'être détectés par le dispositif 7 détecteur, c'est à dire, ceux appartenant au domaine spectral à observer.

La gouttière 14 peut être formée d'une bande de matériau synthétique, être semi-rigide et de faible épaisseur. Elle est fixée rigidement à la périphérie de la surface réfléchissante 36. De préférence, la gouttière 14 est fixée au renflement de fixation du réflecteur parabolique 51 à l'aide de colle, d'une soudure, agrafe, ou de tout autre moyen de fixation adapté au matériau composant le renflement de fixation et la gouttière.

Il existe deux modes de réalisation particulièrement avantageux de la gouttière 14. Dans le premier mode de réalisation, la gouttière 14a présente une forme adaptée pour prolonger la forme générale de la surface réfléchissante 36, radialement à l'axe 21 du dispositif réflecteur. Le dispositif 5 réflecteur demeure de la sorte compact. Dans le deuxième mode de réalisation, la gouttière 14b présente une forme moins compacte permettant de protéger latéralement la surface réfléchissante 36 contre d'éventuels impacts de micrométéorites ou autres débris et objets spatiaux.

Dans cette dernière configuration, les cellules photovoltaïques 18 portées par la gouttière 14b sont disposées en une orientation complémentaire de celles situées sur la face opposée à la surface réfléchissante 36. Les deux groupes de cellules photovoltaïques 18 s'exposent ainsi à des incidences différentes des rayonnements reçus de la source de lumière 45. Il est de cette façon possible de générer une puissance électrique suffisante au fonctionnement du système 3 d'acquisition malgré les changements d'orientation du satellite par rapport à la source 45 au cours de son évolution sur son orbite 8. Il est à noter que rien n'empêche de disposer des cellules photovoltaïques 18 sur d'autres parties du satellite 1.

De préférence, le dispositif 6 récepteur comprend également un cache permettant d'empêcher l'incidence directe de rayonnements électromagnétiques sur l'organe 17 détecteur ne provenant pas de la surface réfléchissante 36. Ce cache, dit oeillère 15, est de préférence porté par le support 31 à sa périphérie et s'étend vers le haut avec un angle d'ouverture approprié de façon que le champ de vision de l'organe détecteur soit limité exclusivement à un angle solide comprenant la surface réfléchissante 36 et la gouttière 14. Sur les figures 4, 6 et 8, l'oeillère 15 n'est pas représentée, par souci de clarté du dessin.

Le dispositif 6 récepteur génère, du fait qu'il soit placé dans le champ de visée du dispositif 5 réflecteur, une zone aveugle sur la surface réfléchissante 36. L'oeillère 15 génère, de par sa forme en cône de révolution tronqué, une zone aveugle d'autant plus importante que sa hauteur est élevée. Un compromis doit donc être trouvé entre la hauteur de l'oeillère 15 et l'aire efficace de la surface réfléchissante 36. Par aire efficace, on désigne l'aire de la surface réfléchissante hors zone aveugle. Un équilibre doit de plus être trouvé entre la hauteur de l'oeillère 15 et le diamètre de la gouttière 14 de façon à ce que le système 3 d'acquisition soit le moins encombrant possible en vue de son chargement dans le lanceur 10. En outre, la zone aveugle peut être rendue absorbante des rayonnements électromagnétiques appartenant au domaine spectral à observer pour prévenir en cet endroit la réflexion de rayonnements parasites.

Un filtre 32 est disposé entre l'organe détecteur 17 et le dispositif 5 réflecteur de manière à le protéger de rayonnements infrarouges thermiques provenant du dispositif 5 réflecteur.

Les masses et géométrie spatiale de l'ensemble doivent permettre une stabilisation par gradient de gravité du satellite 1 dans les conditions satisfaisantes.

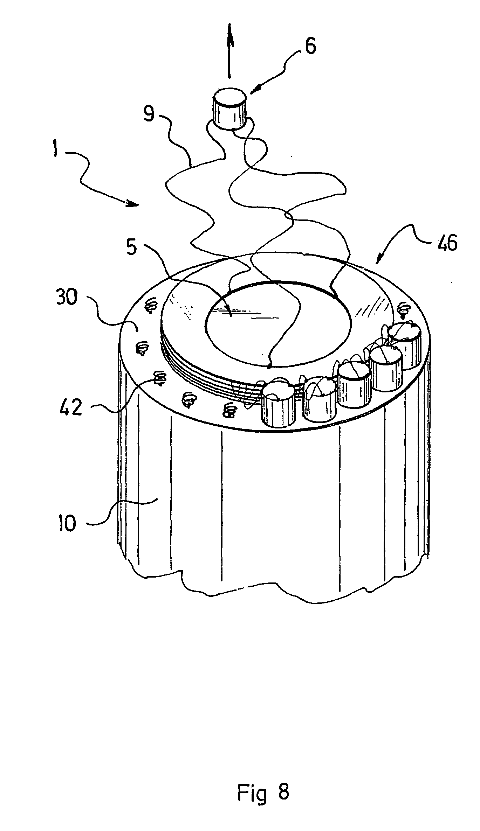

L'un des avantages d'un satellite 1 selon l'invention est sa capacité à pouvoir être replié dans un état extrêmement compact en vue de son stockage et surtout de son lancement. Pour ce faire, plusieurs variantes de réalisation sont possibles. Dans la variante illustrée à la figure 8, une pluralité de satellites 1 conformes à l'invention peuvent être empilés les uns sur les autres à l'état replié sur un plateau 30 en vue de réaliser un tir groupé. Comme on le voit, les dispositifs réflecteurs 5 sont empilés les uns sur les autres et les dispositifs récepteurs 6 disposés à la périphérie de cette pile 46 sur un plateau 30. Des ressorts 42 ou autres actionneurs peuvent être prévus entre le plateau 30 et chaque dispositif 6 récepteur pour assurer successivement leur propulsion en dehors du lanceur 10 en entraînant de cette façon le reste du satellite 1, le plaçant ainsi en orbite.

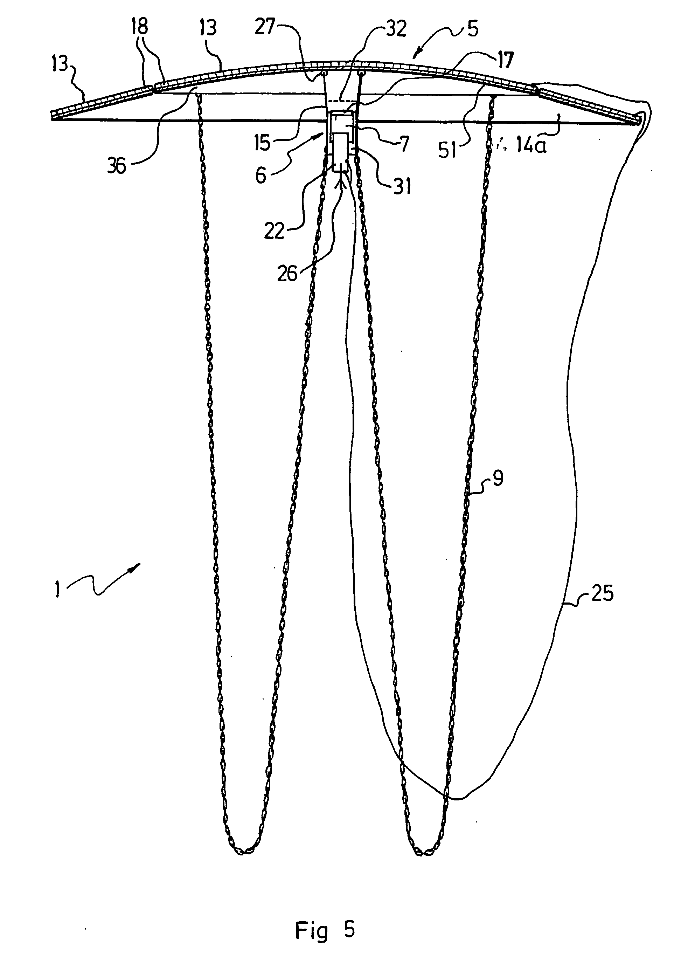

La figure 5 représente une variante de réalisation dans laquelle le dispositif 6 récepteur est, à l'état replié du système 3 d'acquisition, fixé à la partie centrale de la surface réfléchissante 36, qui constitue la zone aveugle de la surface réfléchissante 36, et qui peut être doté d'un système de fixation provisoire 27 du dispositif 6 récepteur. Le système de fixation provisoire 27 est doté de moyens d'actionnement commandés permettant le déploiement de l'ensemble après la mise en orbite. En pratique, le système de fixation provisoire 27 peut être un boulon pyrotechnique.

Il est à noter qu'il est préférable que la méthode de mise en orbite soit adaptée pour limiter les couples imprimés au satellite 1 durant sa mise en orbite. Il importe notamment de ne pas induire une rotation du dispositif 7 détecteur autour de l'axe 16 de détection nécessitant de réorienter trop souvent une rangée de détecteurs de l'organe 17 détecteur perpendiculairement à la trajectoire au sol du satellite 1 à l'aide du dispositif motorisé d'orientation tel que décrit.

Typiquement, avec une surface réfléchissante 36 de 50 cm de diamètre et un réflecteur parabolique 51 d'une épaisseur de l'ordre de 1 mm, un satellite 1 selon l'invention peut présenter une masse totale inférieure à 5 kg.

Les satellites 1 selon l'invention sont dépourvus de systèmes de navigation, de systèmes de contrôle actif de visée et de moyens de propulsion. Il est donc impossible de leur spécifier une zone à observer à un moment donné. Les satellites 1 réalisent plutôt, selon le mode de réalisation préféré de l'invention, l'observation des zones défilant sous leurs trajectoires orbitales 8 respectives (voir la figure 2). Ces trajectoires orbitales 8 sont naturelles ; les satellites 1 ne sont pas guidés de façon à suivre une trajectoire orbitale de référence donnée.

Le satellite 1 dans sa version la plus simple ne possède pas de batterie et fonctionne donc en permanence, dès que la puissance électrique délivrée par les cellules photovoltaïques 18 le permet.

Les satellites 1 sont conçus de façon à avoir un coût de fabrication, de lancement et d'utilisation faible. Il est ainsi possible de constituer une flotte 33 comportant un grand nombre de satellites 1. La flotte 33, lorsque mise en orbite, assure statistiquement une observation régulière (de l'ordre d'une observation quotidienne) de toutes les zones à couvrir par effet de saturation. L'ensemble des zones à couvrir forment conjointement une zone dite de couverture.

A titre d'exemple, un satellite 1 selon l'invention peut enregistrer une bande de terrain de 12 km de largeur à la surface de la Terre avec une résolution d'un mètre (12000 détecteurs) pendant le tiers de sa période de révolution. Il peut donc fournir une observation de 80 km$^2$ de surface sol par seconde, soit environ 2 500 000 km$^2$ par jour, soit encore 0,5% de la surface de la Terre. Pour assurer une bonne probabilité d'observation par jour de n'importe quelle zone de surface de la Terre, hors aléas météorologiques, 200 satellites 1 selon l'invention orbitant aléatoirement sont suffisants. Avec une masse inférieure à 5 kg pour chaque satellite 1, l'ensemble représente une masse totale de l'ordre d'une tonne. Chaque satellite 1 peut être localisé par son émission de télémesures. La charge utile de chaque satellite 1 peut être simplement et facilement protégée à l'aide de films réflecteurs des rayonnements électromagnétiques dommageables pour les circuits électroniques et autres composantes du satellite. A une altitude de 5 000 km, un tel satellite peut offrir une résolution de 10 m et un champ d'observation de 120 km. Un satellite unique peut alors capter 4% de la Terre par jour et 25 satellites peuvent suffire pour donner statistiquement accès quotidiennement à tout point du globe.

Sans propulsion, les satellites 1 ne peuvent pas conserver durablement l'héliosynchronisme. C'est la raison pour laquelle il est préférable de placer des satellites 1 selon l'invention sur des orbites inclinées. Les satellites 1 peuvent être placés sur les orbites à 60° ou 65° de façon à réaliser l'observation des masses continentales hors de l'Antarctique.

Après la mise en orbite, le satellite 1 reçoit des télécommandes en provenance du sol, et plus précisément en provenance d'une station de télécommande/télémesure située sur le sol du corps céleste 2. En variante, cette station peut être disposée en tout autre point de l'espace dès lors qu'elle est susceptible d'émettre des signaux de télécommande à destination de l'antenne 26 du satellite 1 ou de recevoir des signaux en provenance de cette antenne 26, et ce, par l'intermédiaire d'une liaison radio telle que celle traditionnellement utilisée dans les liaisons télécommande/télémesure de satellites.

Le satellite doit pouvoir faire l'objet de plusieurs fonctions de télécommande.

La première fonction consiste à orienter la rangée de détecteurs de l'organe 17 détecteur perpendiculairement à la trajectoire du satellite et à la trace de cette trajectoire sur le sol du corps céleste 2. Lorsqu'un défaut de perpendicularité de l'organe 17 détecteur par rapport à cette trajectoire est détectée au sol, une commande peut être envoyée pour déclencher le fonctionnement du moteur du dispositif motorisé d'orientation, c'est à dire le moteur 50 de contrarotation, pour faire pivoter le dispositif détecteur 7, et donc l'organe détecteur 17, autour de l'axe 16 de détection.

La deuxième fonction de télécommande consiste, si aucune télémesure n'est reçue du satellite, à commander le déclenchement de micropropulseurs 39 fixés par exemple sur la pièce contrarotative 22 de façon à impartir un effort ayant une composante radiale au dispositif 6 récepteur. En effet, il est possible dans ce cas que le satellite 1 soit stabilisé par gradient de gravité dans le sens opposé à une orientation de visée nominale, c'est-à-dire avec la surface réfléchissante 36 orientée à l'opposé du corps céleste 2. Pour le faire revenir à une orientation de visée, il suffit de lui impartir un effort de rotation autour d'un axe transversal (c'est-à-dire sensiblement orthogonal à la direction longitudinale), et ce, grâce au dispositif à micropropulseurs 39, selon une valeur prédéterminée. Il est possible soit de dimensionner l'effort correspondant pour entraîner une rotation du satellite 1 sur lui-même avec une amplitude correspondant exactement à un retour en orientation de visée nominale, soit de réitérer l'utilisation du dispositif à micropropulseurs 39 jusqu'à recevoir un signal. Statistiquement, il y a une chance sur deux pour que le satellite 1 se stabilise dans une orientation de visée nominale. Plusieurs types de micropropulseurs peuvent être employés tels que ceux décrits dans le brevet français FR-2 795 135.

Un deuxième mode de réalisation prévoit l'utilisation du dispositif d'amortissement ou d'amplification des oscillations du satellite tel que décrit précédemment pour amplifier le mouvement oscillatoire du satellite 1 jusqu'à le faire basculer.

Un troisième mode de réalisation prévoit une utilisation combinée du dispositif d'amortissement ou d'amplification des oscillations du satellite 1 et de micropropulseurs 39 pour faire basculer le satellite 1.

La troisième fonction de télécommande consiste à réaliser un réglage collectif ou individuel des actionneurs 20, 11 pour l'ajustement des longueurs des suspentes filiformes 9 et/ou pour réaliser un réglage de la position de l'organe détecteur à l'aide du moteur 44 associé au dispositif 35 de suspension. Cet ajustement peut être effectué jusqu'à ce que l'image reçue par la station soit optimale.

Dans le cas où l'information obtenue est numérisée à bord du satellite 1, par exemple à l'aide de moyens de numérisation de la carte électronique 34, ou dans le cas où l'acquisition d'informations est réalisée de façon numérique, tel qu'avec une barrette CCD, la quatrième télécommande consiste à pouvoir régler la fréquence d'échantillonnage selon l'altitude du satellite 1 et en fonction de sa vitesse de défilement. Il s'agit en effet d'une fréquence d'horloge, c'est-à-dire d'une valeur numérique qui peut être aisément réglée par commande depuis le sol. Cette commande est d'autant plus importante que l'orbite 8 du satellite 1 peut être excentrique. En effet, la vitesse du satellite 1 par rapport au sol n'est dans ce cas pas constante.

La cinquième fonction de télécommande consiste à déclencher le dispositif d'amortissement ou d'amplification des oscillations en tangage et roulis de façon à amortir une oscillation pendulaire tel que décrit précédemment.

La sixième fonction de télécommande consiste éventuellement à envoyer une clé de cryptage des signaux de télémesure retournés par le satellite 1 vers le sol.

Enfin, une fonction de télécommande doit permettre de stopper le fonctionnement de la carte électronique 34 définitivement, en fin de vie de satellite 1, et ce, pour éviter la pollution du spectre des fréquences radio.

L'ensemble de ces télécommandes correspond à un flux de données extrêmement faible à destination des satellites 1.

La télémesure correspond par contre à un flux de données beaucoup plus important. Des techniques de compression de données, telles que la norme JPEG, peuvent être envisagées pour minimiser la bande passante nécessaire.

L'invention peut faire l'objet de nombreuses variantes de réalisation et de diverses applications autres que celles décrites ci-dessus.

En particulier, la géométrie générale du système 3 d'acquisition peut être différente de celle décrite ci-dessus et représentée sur les figures (en forme générale de parachute). Par exemple, rien n'empêche de prévoir une structure s'étendant radialement au niveau du dispositif 6 récepteur de façon à pouvoir disposer les suspentes filiformes 9 parallèlement à l'axe 21 du dispositif réflecteur à l'état déployé. Cette structure qui peut s'étendre entre le dispositif 6 récepteur et l'extrémité libre de chaque suspente filiforme 9 doit néanmoins être transparente aux rayonnements électromagnétiques en provenance du corps céleste 2 vers la surface réfléchissante 36. Il peut s'agir par exemple d'une structure à rayons. De même, les différents dispositifs mécaniques de liaison et/ou de motorisation (moteurs 49, 50, 44, dispositif de suspension 35 et actionneurs...) peuvent faire l'objet de très nombreuses variantes d'exécution.

Rien n'empêche bien sûr, bien que cela puisse en augmenter le coût, que le satellite 1 selon l'invention puisse comprendre un dispositif de stockage d'énergie, tel qu'une batterie et/ou un dispositif de stockage embarqué d'informations, tel qu'une mémoire électronique et/ou un dispositif de localisation.

Il peut de plus être prévu d'équiper un satellite selon l'invention avec des surfaces réfléchissantes spécialisées (autres que la surface réfléchissante 36 du dispositif 5 réflecteur) afin de protéger les éléments du satellite 1, sensibles aux rayonnements thermiques, tels que l'électronique du dispositif 7 détecteur et le système de télémesure.

Il est à noter qu'un satellite 1 tel qu'il a été décrit, peut faire l'objet d'une fabrication industrielle en série, contrairement aux satellites d'observation connus.

En outre, les dimensions générales et caractéristiques données à titre d'exemples ci-dessus sont applicables essentiellement pour l'observation terrestre dans le domaine du visible. L'invention permet l'observation d'autres planètes que la Terre, et est applicable en particulier à l'observation martienne.

Par ailleurs, l'invention est notamment applicable à une observation passive ou active dans le domaine des micro-ondes. Il est à noter qu'une observation active nécessite l'émission d'une impulsion tel que pour le fonctionnement du radar. Il est dans un tel cas nécessaire de doter le système d'acquisition d'au moins un émetteur adapté pour pouvoir générer une impulsion électromagnétique appartenant au domaine des micro-ondes. L'émetteur est de préférence placé en un endroit du plan d'incidence et orienté vers la surface réfléchissante 36 de façon à ce que l'impulsion y soit réfléchie en direction d'une zone du corps céleste 2 à observer. De préférence, un guide d'ondes, dit cornet actif, peut alternativement jouer le rôle d'émetteur de l'impulsion et de récepteur de l'écho.

Le système 3 d'acquisition du satellite 1 peut notamment par exemple constituer un altimètre, un radar à pluie, un radar à synthèse d'ouverture (appelé aussi radar SAR) ou autre.

En pratique, le radar à pluie peut être réalisé à l'aide d'une batterie de cornets actifs constituant l'organe détecteur. Les cornets actifs sont disposés dans le plan d'incidence en une rangée destinée à s'étendre de part et d'autre de l'axe 16 de détection et à être placé perpendiculairement à la vitesse du satellite. L'écho reçu par un des deux cornets situé en bout de rangée peut être périodiquement analysé à l'aide d'un moyen de traitement du signal de la carte électronique 34 afin d'en déterminer le doppler moyen. Cette valeur permet de déterminer l'angle que présente la rangée de cornets actifs par rapport à la trajectoire au sol du satellite 1. Le doppler moyen pourrait ainsi être employé en combinaison du moteur 50 de contrarotation et de moyens de contrôles de la carte électronique 34 pour réguler automatiquement la position angulaire de la rangée de guides d'ondes par rapport à la trajectoire au sol du satellite 1.

Il est aussi possible de réaliser une observation passive de zones du corps céleste 2 à l'aide d'un organe détecteur similaire comportant des cornets passifs, c'est à dire des guides d'ondes n'émettant pas d'impulsions. Il s'agit alors d'observer les rayonnements émanant des zones du corps céleste 2 conformément aux techniques de radiométrie micro-ondes passive. Un satellite doté d'un tel organe détecteur peut par exemple réaliser des mesures de l'humidité de surface du corps céleste. Un cornet actif est de préférence placé en bout de rangée de la batterie de guide d'ondes afin de permettre, tel que décrit précédemment, le calcul du doppler moyen de façon à permettre l'orientation de l'organe détecteur.

Le radar à synthèse d'ouverture est en pratique réalisé à l'aide d'un organe détecteur doté d'une structure rigide sur lequel est placé un cornet actif. La structure rigide est adaptée pour placer le cornet actif sensiblement dans le plan d'incidence et en décalage par rapport à l'axe 16 de détection lorsque le dispositif 5 réflecteur et le dispositif 6 récepteur sont en position relative de fonctionnement. Cette position d'observation du cornet actif permet de réaliser une observation en biais de la surface du corps céleste 2. La carte électronique 34 est dotée de moyens de traitement du signal adaptés pour pouvoir réaliser la synthèse d'ouverture et la compression d'impulsions conformément au fonctionnement d'un radar à synthèse d'ouverture.

En pratique, un altimètre peut être réalisé à l'aide d'un organe détecteur comportant un seul cornet actif placé dans le plan d'incidence, sensiblement à la focale de la surface réfléchissante 36. Le dispositif 6 récepteur peut être grandement simplifié dans un tel cas. Il n'est en effet plus nécessaire d'orienter l'organe détecteur par rapport à la trajectoire du satellite au sol. Le dispositif motorisé d'orientation, la pièce contrarotative 22 ainsi que le dispositif 35 de suspension tels que décrits précédemment n'ont ainsi plus d'utilité. Le satellite selon l'invention peut donc en être dépourvu. Une structure rigide supportant l'organe détecteur, la carte électronique 34 et l'antenne de télémesure peut être directement reliée aux suspentes filiformes 9, se substituant ainsi à la douille 40 et au support 31.

Il est aussi possible de combiner plusieurs des configurations précédente afin de réaliser un satellite selon l'invention doté d'un système d'acquisition multifonctionnel. Il serait ainsi possible d'employer un même satellite 1 selon l'invention comme altimètre, radar SAR, radar à pluie etc.

Le système 3 d'acquisition selon l'invention peut aussi être adapté pour pouvoir effectuer de la cartographie infrarouge d'un corps céleste tel que la Terre en employant des micro-bolomètres comme détecteurs.

## Revendications

1. Satellite (1) d'observation destiné à être placé en orbite autour d'un corps céleste (2) comportant un système (3) d'acquisition apte à réaliser l'acquisition d'informations reçues sous forme de rayonnements électromagnétiques, le système (3) d'acquisition comprenant :

   - un dispositif (6) récepteur comportant un dispositif (7) détecteur apte à réaliser l'acquisition desdites informations,
   - un dispositif (5) réflecteur desdits rayonnements électromagnétiques reçus, comprenant au moins une surface réfléchissante (36),
   - un système (19) de liaison mécanique qui amarre l'un à l'autre le dispositif (5) réflecteur et le dispositif (6) récepteur,

   ce système (3) d'acquisition étant adapté pour pouvoir réaliser l'acquisition desdites informations lorsque le dispositif (6) récepteur et le dispositif (5) réflecteur sont placés l'un par rapport à l'autre en une position relative de fonctionnement dans laquelle le dispositif (7) détecteur reçoit tout ou partie desdits rayonnements électromagnétiques réfléchis par le dispositif (5) réflecteur et réalise l'acquisition des informations correspondantes, le système (3) d'acquisition étant adapté, de par sa géométrie et sa répartition massique, pour s'orienter de lui-même par gradient de gravité selon une orientation de visée, dans laquelle, le dispositif (6) récepteur et le dispositif (5) réflecteur étant en position relative de fonctionnement, le dispositif (5) réflecteur est orienté vers le corps céleste (2) pour pouvoir recevoir des rayonnements électromagnétiques qui proviennent d'une zone du corps céleste (2), dite zone visée (54), le système (3) d'acquisition étant susceptible de réaliser l'acquisition d'informations à acquérir transmises par ces rayonnements électromagnétiques, **caractérisé en ce que** le système (19) de liaison mécanique est adapté pour placer le dispositif (5) réflecteur et le dispositif (6) récepteur l'un par rapport à l'autre en au moins deux configurations distinctes correspondant respectivement à deux états du système (3) d'acquisition :

   - un état, dit état déployé, dans lequel le dispositif (5) réflecteur et le dispositif (6) récepteur sont stabilisés en position relative de fonctionnement sous l'effet du gradient de gravité,
   - un état, dit état replié, dans lequel le dispositif (6) récepteur et le dispositif (5) réflecteur sont rapprochés l'un de l'autre, le système (3) d'acquisition, plus compact qu'à l'état déployé, étant ainsi adapté au chargement dans un lanceur (10) et/ou à l'entreposage.

2. Satellite selon la revendication 1, **caractérisé en ce que** le système (19) de liaison mécanique est de type souple et non élastique en flexion et est adapté pour se tendre sous l'effet du gradient de gravité lorsque le satellite (1) est placé en orbite, jusqu'à atteindre une configuration d'équilibre dans laquelle le dispositif d'acquisition (3) est stabilisé dans l'état déployé.

3. Satellite selon la revendication 2, **caractérisé en ce que** le système (19) de liaison mécanique comprend au moins trois suspentes filiformes (9), rigides en traction, souples et non élastiques en flexion, et ayant chacune deux extrémités, dont une première extrémité est fixée sur le dispositif (5) réflecteur et dont une deuxième extrémité est fixée sur le dispositif (6) récepteur, lesdites suspentes étant chacune fixées en des endroits distincts du dispositif (5) réflecteur et du dispositif (6) récepteur de façon à ce que ;

   - les assiettes du dispositif (6) récepteur et du dispositif (5) réflecteur puissent se stabiliser l'une par rapport à l'autre sous l'effet du gradient de gravité,
   - les suspentes filiformes (9) n'interceptent pas, lorsque le système (3) d'acquisition est à l'état déployé, les rayonnements électromagnétiques provenant de la(des) surface(s) réfléchissante (s) (36) et évoluant à destination du dispositif (7) détecteur.

4. Satellite selon la revendication 3, **caractérisé en ce que** les suspentes filiformes (9) sont constituées d'un ou plusieurs matériau(x) choisi(s) de façon que les longueurs des suspentes filiformes (9) restent sensiblement constantes malgré les fluctuations thermiques qu'elles peuvent subir une fois le satellite (1) placé en orbite.

5. Satellite selon l'une des revendications 3 et 4, **caractérisé en ce que** les suspentes filiformes (9) sont constituées en tout ou partie d'un ou plusieurs matériau(x) aptes à absorber au moins des rayonnements électromagnétiques appartenant au domaine spectral à observer, de sorte que ces suspentes ne génèrent aucune réflexion parasite sur le dispositif (7) détecteur.

6. Satellite selon l'une des revendications 3 à 5, **caractérisé en ce que** les suspentes filiformes (9) sont des chaînes.

7. Satellite selon l'une des revendications 3 à 6, **caractérisé en ce que** le système de liaison mécanique (9) comprend des moyens (11) de réglage motorisés de la longueur d'au moins une des suspentes filiformes (9).

8. Satellite selon la revendication 7, **caractérisé en ce que** les moyens (11) de réglage motorisés comportent au moins un actionneur piézoélectrique (20).

9. Satellite selon l'une des revendications 1 à 8, **caractérisé en ce qu'**il comprend une pluralité de caches aptes conjointement à masquer, lorsque le dispositif (5) réflecteur et le dispositif (6) récepteur sont en position relative de fonctionnement, le dispositif (7) détecteur contre l'incidence directe de rayonnements électromagnétiques appartenant au domaine spectral à observer et provenant de sources extérieures au volume intérieur du système d'acquisition, géométriquement circonscrit par le(s) cache(s), le système de liaison mécanique (9), le dispositif (5) réflecteur et le dispositif (6) récepteur.

10. Satellite selon la revendication 9, **caractérisé en ce que** le dispositif (5) réflecteur comporte au moins un cache périphérique, dit gouttière (14), adapté pour s'étendre autour de la périphérie de la(des) surface (s) réfléchissante(s) (36).

11. Satellite selon l'une des revendications 9 et 10, **caractérisé en ce que** le dispositif (6) récepteur comporte au moins un cache, dit oeillère (15), s'étendant globalement vers le dispositif (5) réflecteur lorsque le dispositif (5) réflecteur et le dispositif (6) récepteur sont en position relative de fonctionnement.

12. Satellite selon l'une des revendications 1 à 11, **ca-**

**ractérisé en ce que** le dispositif (7) détecteur comporte au moins un organe (17) détecteur comprenant au moins un détecteur choisi parmi les détecteurs à transfert de charge, les guides d'ondes, les microbolomètres.

13. Satellite selon la revendication 12, **caractérisé en ce que** :

    - au moins une surface réfléchissante (36) est concave, symétrique de révolution autour d'un axe (21), dit axe (21) du dispositif réflecteur, et adaptée pour observer une zone du corps céleste (2) centrée sur l'axe (21) du dispositif (5) réflecteur,
    - et l'organe détecteur (17) est au moins sensiblement placé dans l'axe (21) du dispositif (5) réflecteur lorsque le dispositif (5) réflecteur et le dispositif (6) récepteur sont en position relative de fonctionnement,

14. Satellite selon la revendication 13, **caractérisé en ce que**, la surface réfléchissante (36) étant en forme de paraboloïde de révolution, le rapport entre la distance focale et le diamètre de la surface réfléchissante (36) est supérieur à 5.

15. Satellite selon l'une des revendications 12 à 14, **caractérisé en ce que** le système (3) d'acquisition comporte au moins un filtre (32) bloquant des rayonnements infrarouges thermiques placé de façon à protéger l'organe détecteur (17) de rayonnements infrarouges thermiques provenant du dispositif (5) réflecteur.

16. Satellite selon l'une des revendications 1 à 15, **caractérisé en ce qu'**il comprend une alimentation électrique à cellules photovoltaïques (18).

17. Satellite selon la revendication 16, **caractérisé en ce que** des cellules photovoltaïques (18) sont disposées sur au moins une surface du dispositif (5) réflecteur opposée à la(aux) surface(s) réfléchissante(s) (36).

18. Satellite selon la revendication 17, **caractérisé en ce qu'**il comprend au moins un cordon d'alimentation (25) conducteur souple de longueur supérieure à celle du système (19) de liaison mécanique à l'état déployé et reliant électriquement des cellules photovoltaïques (18) disposées sur le dispositif (5) réflecteur au dispositif (6) récepteur.

19. Satellite selon la revendication 18, **caractérisé en ce que** :

    - le dispositif (6) récepteur comprend un support (31) sur lequel le dispositif (7) détecteur est monté rotatif autour d'un axe (16), dit axe (16) de détection,
    - le dispositif (7) détecteur comprend un dispositif motorisé d'orientation du dispositif détecteur autour de l'axe de détection (16).

20. Satellite selon la revendication 19, **caractérisé en ce que** le dispositif (6) récepteur comprend un dispositif (35) de suspension électromagnétique et/ou mécanique à frottement négligeable, du dispositif (7) détecteur par rapport au support (31) du dispositif (6) récepteur.

21. Satellite selon l'une des revendications 1 à 20, **caractérisé en ce que** le système (3) d'acquisition comprend un dispositif, dit dispositif d'amortissement ou d'amplification, permettant l'amortissement ou l'amplification des oscillations du satellite (1) en tangage et roulis, lorsque le dispositif (5) réflecteur et le dispositif (6) récepteur sont en position relative de fonctionnement.

22. Satellite selon la revendication 21, **caractérisé en ce que** le dispositif d'amortissement ou d'amplification comprend un moteur apte à faire monter et descendre au moins une masse le long de l'axe (16) de détection.

23. Satellite selon l'une des revendications 1 à 22, **caractérisé en ce qu'**il comprend un dispositif de télémesure apte à transmettre des informations acquises à une station de réception située à distance du satellite (1).

24. Satellite selon l'une des revendications 1 à 23, **caractérisé en ce que** le dispositif d'acquisition (3) comprend un dispositif (27) de fixation provisoire du dispositif (6) récepteur au sein d'une zone aveugle de la surface réfléchissante (36) permettant de maintenir le système (3) d'acquisition à l'état replié.

25. Satellite selon l'une des revendications 1 à 24, **caractérisé en ce que** le système (3) d'acquisition comprend des moyens (39) aptes à le faire pivoter lorsque le dispositif (5) réflecteur et le dispositif (6) récepteur sont en position relative de fonctionnement, autour d'un axe transversal du système (3) d'acquisition.

26. Satellite selon l'une des revendications 1 à 25, **caractérisé en ce que** le dispositif (5) réflecteur est adapté pour que la surface réfléchissante (36) atteigne un équilibre géométrique fonctionnel en moins d'une demi-période de révolution autour du corps céleste (2) lorsque le dispositif (5) réflecteur subit un stress thermique causé par son passage d'un segment d'orbite en éclipse d'une source (45) de rayonnement thermique vers un segment d'orbite exposé à ladite source (45).

27. Satellite selon l'une des revendications 1 à 26, **caractérisé en ce que** sa masse est inférieure à 10 kilogrammes.

28. Satellite selon l'une des revendications 1 à 27, **caractérisé en ce qu'**il est constitué du système d'acquisition.

29. Procédé d'observation d'un corps céleste (2) dans lequel :

   - on place en orbite autour de ce corps céleste (2) au moins un satellite (1) selon l'une des revendications 1 à 28,
   - on laisse chaque satellite (1) s'orienter de lui-même par gradient de gravité.

30. Procédé selon la revendication 29, **caractérisé en ce qu'**on place, sur au moins une orbite (8), une flotte (33) de plusieurs satellites (1) selon l'une des revendications 1 à 29.

31. Procédé selon l'une des revendications 29 ou 30, **caractérisé en ce que** chaque satellite (1) est placé sur une orbite (8) non géostationnaire, et **en ce qu'**on utilise un nombre de satellites (1) adapté pour permettre statistiquement l'acquisition quotidienne d'informations d'observation sur toutes les portions d'au moins une zone de couverture du corps céleste (2) par effet de saturation.

32. Procédé selon l'une des revendications 29 à 31, **caractérisé en ce qu'**on laisse chaque satellite (1) décrire une trajectoire (8) orbitale naturelle sans correction active de cette trajectoire (8) orbitale.

33. Procédé selon l'une des revendications 29 à 32, **caractérisé en ce qu'**on utilise au moins un lanceur (10) dans lequel on groupe une pluralité de satellites (1) d'une flotte (33) de satellites (1) afin de les placer en orbite autour du corps céleste (2).

34. Procédé selon la revendication 33, **caractérisé en ce que** :

   - les dispositifs réflecteurs (5) desdits satellites (1) sont emboîtés les uns dans les autres en une pile (46) sur un plateau (30) d'un lanceur (10),
   - les dispositifs récepteurs (6) desdits satellites (1) sont placés sur le plateau (30) autour de la pile (46), chacun d'eux étant placé sur un dispositif d'éjection (42) apte à le propulser en dehors du lanceur (10) lors de la mise en orbite.

35. Flotte (33) de satellites (1) d'observation selon l'une des revendications 1 à 28, placée sur au moins une orbite (8) autour d'un corps céleste (2).

36. Flotte (33) selon la revendication 35, **caractérisée en ce que** les satellites (1) sont placés sur au moins une orbite non géostationnaire, et **en ce que** la flotte (33) comprend un nombre de satellites (1) adapté pour permettre statistiquement l'acquisition quotidienne d'informations d'observation sur toutes les portions d'au moins une zone de couverture du corps céleste (2) par effet de saturation.

**Claims**

1. An observation satellite (1) which is intended to be placed in orbit around a celestial body (2), and which includes a suitable capture system (3) to capture information which is received in the form of electromagnetic radiation, the capture system (3) comprising:

   - a receiving device (6) including a suitable detecting device (7) to capture the said information,
   - a device (5) to reflect the said received electromagnetic radiation, comprising at least one reflecting surface (36),
   - a linking mechanical system (19) which moors the reflecting device (5) and receiving device (6) to each other,

   this capture system (3) being suitable to be able to capture the said information when the receiving device (6) and reflecting device (5) are placed relative to each other in a functioning relative position in which the detecting device (7) receives all or part of the said electromagnetic radiation which is reflected by the reflecting device (5), and captures the corresponding information, the capture system (3) being suitable, by its geometry and mass distribution, to orient itself of its own accord by gravity gradient according to an aiming orientation, in which when the receiving device (6) and reflecting device (5) are in a functioning relative position, the reflecting device (5) is oriented toward the celestial body (2) to be able to receive the electromagnetic radiation which originates in an area of the celestial body (2), called the aimed-at area (54), the capture system (3) being capable of capturing information which is to be captured and is transmitted by this electromagnetic radiation, **characterized in that** a satellite according to claim 1, **characterized in that** the linking mechanical system (19) is suitable for placing the reflecting device (5) and receiving device (6) relative to each other in at least two distinct configurations, corresponding respectively to two states of the capture system (3):

   - one state called deployed, in which the reflecting device (5) and receiving device (6) are stabilized in the functioning relative position under the effect of the gravity gradient,

- one state called folded, in which the receiving device (6) and reflecting device (5) are close to each other, and the capture system (3) is more compact than in the deployed state, and therefore suitable for being loaded into a launcher (10) and/or for storage.

2. A satellite according to claim 1, **characterized in that** the linking mechanical system (19) is of a type which is flexible and inelastic under flexion, and is suitable for stretching under the effect of the gravity gradient when the satellite (1) is placed in orbit, until it reaches an equilibrium configuration in which the capture device (3) is stabilized in the deployed state.

3. A satellite according to claim 2, **characterized in that** the linking mechanical system (19) comprises at least three threadlike suspension lines (9) which are rigid under traction and flexible and inelastic under flexion, and each having two extremities, of which the first extremity is fixed to the reflecting device (5) and the second extremity is fixed to the receiving device (6), the said suspension lines being each fixed at distinct places of the reflecting device (5) and receiving device (6), in such a way that:

    - the attitudes of the receiving device (6) and reflecting device (5) can stabilize relative to each other under the effect of the gravity gradient,
    - when the capture system (3) is in the deployed state, the threadlike suspension lines (9) do not intercept the electromagnetic radiation which comes from the reflecting surface(s) (36) and advances toward the detecting device (7).

4. A satellite according to claim 3, **characterized in that** the threadlike suspension lines (9) consist of one or more materials which are chosen so that the lengths of the threadlike suspension lines (9) remain approximately constant despite the thermal fluctuations to which they may be subjected once the satellite (1) is placed in orbit.

5. A satellite according to one of claims 3 and 4, **characterized in that** the threadlike suspension lines (9) consist entirely or partly of one or more materials which are suitable for absorbing at least the electromagnetic radiation belonging to the spectral range to be observed, so that these suspension lines do not generate any interfering reflection on the detecting device (7).

6. A satellite according to one of claims 3 to 5, **characterized in that** the threadlike suspension lines (9) are chains.

7. A satellite according to one of claims 3 to 6, **characterized in that** the linking mechanical system (9) comprises motorized means (11) of adjusting the length of at least one of the threadlike suspension lines (9).

8. A satellite according to claim 7, **characterized in that** the motorized means of adjustment (11) include at least one piezoelectric actuator (20).

9. A satellite according to one of claims 1 to 8, **characterized in that** it comprises a plurality of masks which are jointly suitable, when the reflecting device (5) and receiving device (6) are in the functioning relative position, for masking the detecting device (7) against the direct incidence of electromagnetic radiation belonging to the spectral range to be observed, and originating in sources which are external to the internal volume of the capture system, which is geometrically circumscribed by the mask(s), the linking mechanical system (9), the reflecting device (5) and the receiving device (6).

10. A satellite according to claim 9, **characterized in that** the reflecting device (5) includes at least one peripheral mask, called gutter (14), which is adapted to extend around the periphery of the reflecting surface(s) (36).

11. A satellite according to one of claims 9 and 10, **characterized in that** the receiving device (6) includes at least one mask, called blinker (15), which extends as a whole toward the reflecting device (5) when the reflecting device (5) and receiving device (6) are in the functioning relative position.

12. A satellite according to one of claims 1 to 11, **characterized in that** the detecting device (7) includes at least one detecting component (17) comprising at least one detector which is chosen from charge transfer detectors, waveguides, microbolometers.

13. A satellite according to claim 12, **characterized in that**:

    - at least one reflecting surface (36) is concave and has symmetry of revolution around an axis (21), called the axis (21) of the reflecting device, and suitable for observing an area of the celestial body (2) centered on the axis (21) of the reflecting device (5),
    - the detecting component (17) is at least approximately placed in the axis (21) of the reflecting device (5) when the reflecting device (5) and receiving device (6) are in the functioning relative position.

14. A satellite according to claim 13, **characterized in**

**that**, the reflecting surface (36) being in the form of a paraboloid of revolution, the ratio between the focal distance and the diameter of the reflecting surface (36) is greater than 5.

15. A satellite according to one of claims 12 to 14, **characterized in that** the capture system (3) includes at least one filter (32) which blocks thermal infrared radiation, and is placed to protect the detecting component (17) from thermal infrared radiation from the reflecting device (5).

16. A satellite according to one of claims 1 to 15, **characterized in that** it includes an electrical power supply with photovoltaic cells (18).

17. A satellite according to claim 16, **characterized in that** photovoltaic cells (18) are arranged on at least one surface of the reflecting device (5), opposite the reflecting surface (s) (36).

18. A satellite according to claim 17, **characterized in that** it includes at least one flexible conducting power supply cord (25) of a length greater than that of the linking mechanical system (19) in the deployed state, and electrically connecting the photovoltaic cells (18) which are arranged on the reflecting device (5) to the receiving device (6).

19. A satellite according to claim 18, **characterized in that**:

   - the receiving device (6) includes a bracket (31) on which the detecting device (7) is mounted so that it rotates around an axis (16), called the detection axis (16),
   - the detecting device (7) includes a motorized device to orient the detecting device around the detection axis (16).

20. A satellite according to claim 19, **characterized in that** the receiving device (6) includes a device (35) for electromagnetic and/or mechanical suspension of the detecting device (7) relative to the bracket (31) of the receiving device (6), with negligible friction.

21. A satellite according to one of claims 1 to 20, **characterized in that** the capture system (3) includes a device, called the damping or amplifying device, to make it possible to damp or amplify the pitching and rolling oscillations of the satellite (1) when the reflecting device (5) and receiving device (6) are in the functioning relative position.

22. A satellite according to claim 21, **characterized in that** the damping or amplifying device includes a suitable motor to lift or lower at least one mass along the detection axis (16).

23. A satellite according to one of claims 1 to 22, **characterized in that** it includes a suitable telemetry device to transmit captured information to a reception station at a distance from the satellite (1).

24. A satellite according to one of claims 1 to 23, **characterized in that** the capture device (3) includes a device (27) to fix the receiving device (6) temporarily within a blind area of the reflecting surface (36), making it possible to keep the capture system (3) in the folded state.

25. A satellite according to one of claims 1 to 24, **characterized in that** the capture system (3) includes suitable means (39) to make it pivot around a transverse axis of the capture system (3) when the reflecting device (5) and receiving device (6) are in the functioning relative position.

26. A satellite according to one of claims 1 to 25, **characterized in that** the reflecting device (5) is adapted so that the reflecting surface (36) reaches a functional geometric equilibrium in less than a semi-period of revolution around the celestial body (2) when the reflecting device (5) is subjected to thermal stress by passing from a segment of orbit in which a source (45) of thermal radiation is eclipsed to a segment of orbit which is exposed to the said source (45).

27. A satellite according to one of claims 1 to 26, **characterized in that** its mass is less than 10 kilograms.

28. A satellite according to one of claims 1 to 27, **characterized in that** it consists of the capture system (3).

29. A method of observing a celestial body (2), in which:

   - at least one satellite (1) according to one of claims 1 to 28 is placed in orbit around the celestial body (2),
   - each satellite (1) is allowed to orient itself by gravity gradient.

30. A method according to claim 29, **characterized in that** a fleet (33) of several satellites (1) according to one of claims 1 to 29 is placed in at least one orbit (8).

31. A method according to one of claims 29 and 30, **characterized in that** each satellite (1) is placed in a non-geostationary orbit (8), and a suitable number of satellites (1) is used to make it possible statistically to capture observation information daily on all portions of at least one area of coverage of the celestial body (2), by saturation.

32. A method according to one of claims 29 to 31, **characterized in that** each satellite (1) is allowed to describe a natural orbital trajectory (8) without active correction of this orbital trajectory (8).

33. A method according to one of claims 29 to 32, **characterized in that** at least one launcher (10) is used, and multiple satellites (1) of a satellite fleet (33) are grouped in it to be placed in orbit around the celestial body (2).

34. A method according to claim 33, **characterized in that**:

    - the reflecting devices (5) of the said satellites (1) are fitted into each other in a stack (46) on a platform (30) of a launcher (10),
    - the receiving devices (6) of the said satellites (1) are placed on the platform (30) around the stack (46), each of them being placed on a suitable ejecting device (42) to propel it outside the launcher (10) when it is put into orbit.

35. A fleet (33) of observation satellites (1) according to one of claims 1 to 29, placed in at least one orbit (8) around a celestial body (2).

36. A fleet (33) according to claim 35, **characterized in that** the satellites (1) are placed in at least one non-geostationary orbit, and the fleet (33) comprises a suitable number of satellites (1) to make it possible statistically to capture observation information daily on all portions of at least one area of coverage of the celestial body (2), by saturation.

**Patentansprüche**

1. Satellit (1) zur Beobachtung, der in eine Umlaufbahn um einen Himmelskörper (2) gebracht werden soll und ein Erfassungssystem (3) umfaßt, das geeignet ist, die Erfassung von Informationen vorzunehmen, die es in Form von elektromagnetischen Strahlungen erhält, wobei das Erfassungssystem (3) folgende Teile umfaßt:

    - Eine Empfängervorrichtung (6), die eine Detektorvorrichtung (7) umfaßt, die geeignet ist, die Erfassung der besagten Informationen vorzunehmen;
    - Eine Reflektorvorrichtung (5) für die besagten empfangenen elektromagnetischen Strahlungen, die eine reflektierende Oberfläche (36) umfaßt;
    - Ein mechanisches Verbindungssystem (19), das die Reflektorvorrichtung (5) und die Empfängervorrichtung (6) andockt,

wobei das Erfassungssystem (3) angepaßt ist, um die Erfassung der besagten Informationen vorzunehmen, wenn die Empfängervorrichtung (6) und die Reflektorvorrichtung (5) jeweils im Verhältnis in einer relativen Betriebsposition plaziert sind, in der die Detektorvorrichtung (7) alle oder einen Teil der besagten elektromagnetischen Strahlungen erhält, die von der Reflektorvorrichtung (5) reflektiert werden, und es nimmt die Erfassung der entsprechenden Informationen vor, wobei das Erfassungssystem (3) durch seine Geometrie und seine Massenverteilung angepaßt ist, sich selbst nach Schwerkraftgradient nach einer Zielorientierung auszurichten, in der die Empfängervorrichtung (6) und die Reflektorvorrichtung (5) in relativer Betriebsposition sind, die Reflektorvorrichtung (5) ist zum Himmelskörper (2) ausgerichtet, um die elektromagnetischen Strahlungen empfangen zu können, die von einer Zone des Himmelkörpers (2), der sogenannten Zielzone (54), kommen, wobei das Erfassungssystem (3) die Erfassung der zu erfassenden Informationen vornehmen kann, die von diesen elektromagnetischen Strahlungen übermittelt werden, **dadurch gekennzeichnet, daß** das mechanische Verbindungssystem (19) angepaßt ist, die Reflektorvorrichtung (5) und die Empfängervorrichtung (6) im Verhältnis zueinander in mindestens zwei getrennten Konfigurationen zu plazieren, die einem beziehungsweise einem zweiten Zustand des Erfassungssystems (3) entsprechen:

    - Ein sogenannter entfalteter Zustand, in dem die Reflektorvorrichtung (5) und die Empfängervorrichtung (6) in relativer Betriebsposition unter Einwirkung des Schwerkraftgradienten stabilisiert sind;
    - Ein sogenannter eingezogener Zustand, in dem die Empfängervorrichtung (6) und die Reflektorvorrichtung (5) einander angenähert sind, wobei das Erfassungssystem (3), das kompakter als im entfalteten Zustand ist, somit zum Laden in eine Trägerrakete (10) und/oder für die Zwischenlagerung angepaßt ist.

2. Satellit nach Anspruch 1, **dadurch gekennzeichnet, daß** das mechanische Verbindungssystem (19) beim Biegen von geschmeidiger und nicht elastischer Art ist und angepaßt ist, sich unter der Einwirkung des Schwerkraftgradienten zu spannen, wenn der Satellit (1) in die Umlaufbahn gebracht wird, bis sie eine Konfiguration im Gleichgewicht erreicht, in der das Erfassungssystem (3) im entfalteten Zustand stabilisiert ist.

3. Satellit nach Anspruch 2, **dadurch gekennzeichnet, daß** das mechanische Verbindungssystem (19) mindestens drei fadenförmige Fangleinen (9) umfaßt, die bei Zug starr und bei Biegung geschmeidig und nicht elastisch sind, und die jeweils zwei Enden haben, von denen ein erstes Ende auf der Reflektorvorrichtung (5) befestigt ist, und wovon ein zweites Ende auf der Empfängervorrichtung (6) befestigt ist, wobei die besagten Fangleinen jeweils an von der Reflektorvorrichtung (5) und der Empfängervorrichtung (6) getrennten Stellen befestigt sind, so daß:

- die Trimmlagen der Empfängervorrichtung (6) und der Reflektorvorrichtung (5) sich unter der Einwirkung des Schwerkraftgradienten zueinander stabilisieren können,
- die fadenförmigen Fangleinen (9), wenn das Erfassungssystem (3) im entfalteten Zustand ist, nicht die elektromagnetischen Strahlungen unterbrechen, die von der/den reflektierenden Fläche(n) (36) kommen und sich in Richtung der Detektorvorrichtung (7) bewegen.

4. Satellit nach Anspruch 3, **dadurch gekennzeichnet, daß** die fadenförmigen Fangleinen (9) aus einem oder mehreren Werkstoff(en) bestehen, der/die so gewählt wird/werden, daß die Längen der fadenförmigen Fangleinen (9) trotz der Wärmeschwankungen deutlich konstant bleiben, die sie erleiden können, wenn der Satellit (1) in die Umlaufbahn gebracht wurde.

5. Satellit nach einem beliebigen der vorstehenden Ansprüche 3 und 4, **dadurch gekennzeichnet, daß** die fadenförmigen Fangleinen (9) ganz oder teilweise aus einem oder mehreren Werkstoff(en) bestehen, der/die geeignet ist/sind, mindestens elektromagnetische Strahlungen zu absorbieren, die in den zu beobachtenden spektralen Bereich gehören, so daß diese Fangleinen keine parasitäre Reflektion auf der Detektorvorrichtung (7) generieren.

6. Satellit nach einem beliebigen der vorstehenden Ansprüche 3 bis 5, **dadurch gekennzeichnet, daß** die fadenförmigen Fangleinen (9) Ketten sind.

7. Satellit nach einem beliebigen der vorstehenden Ansprüche 3 bis 6, **dadurch gekennzeichnet, daß** das mechanische Verbindungssystem (9) motorbetriebene Einstellmittel (11) in der Länge von mindestens einer der fadenförmigen Fangleinen (9) umfaßt.

8. Satellit nach Anspruch 7, **dadurch gekennzeichnet, daß** die motorbetriebenen Einstellmittel (11) mindestens ein piezoelektrisches Wirkglied (20) umfassen.

9. Satellit nach einem beliebigen der vorstehenden Ansprüche 1 bis 8, **dadurch gekennzeichnet, daß** er mehrere Abdeckungen umfaßt, die geeignet sind, wenn die Reflektorvorrichtung (5) und die Empfängervorrichtung (6) in relativer Betriebsposition sind, gemeinsam die Detektorvorrichtung (7) gegen den direkten Einfall von elektromagnetischen Strahlungen abzudecken, die in den zu beobachtenden spektralen Bereich gehören und von Quellen außerhalb des Innenvolumens des Erfassungssystems kommen und geometrisch von der/den Abdeckung(en), dem mechanischen Verbindungssystem (9), der Reflektorvorrichtung (5) und der Empfängervorrichtung (6) verhindert werden.

10. Satellit nach Anspruch 9, **dadurch gekennzeichnet, daß** die Reflektorvorrichtung (5) mindestens eine periphere Abdeckung, Rinne (14) genannt, umfaßt, die geeignet ist, sich um die Peripherie der besagten reflektierenden Fläche(n) (36) zu erstrecken.

11. Satellit nach einem beliebigen der vorstehenden Ansprüche 9 und 10, **dadurch gekennzeichnet, daß** die Empfängervorrichtung (6) mindestens eine Abdeckung, Klappe (15) genannt, umfaßt, die sich insgesamt zur Reflektorvorrichtung (5) erstreckt, wenn die Reflektorvorrichtung (5) und die Empfängervorrichtung (6) in relativer Betriebsposition sind.

12. Satellit nach einem beliebigen der vorstehenden Ansprüche 1 bis 11, **dadurch gekennzeichnet, daß** die Detektorvorrichtung (7) mindestens ein Detektororgan (17) umfaßt, das mindestens einen Detektor umfaßt, der unter den Lasttransferdetektoren, den Wellenleitern, den Mikrobolometern gewählt wird.

13. Satellit nach Anspruch 12, **dadurch gekennzeichnet, daß**:

- mindestens eine reflektierende Fläche (36) konkav, symmetrisch mit Drehung um eine Achse (21), der sogenannten Achse (21) der Reflektorvorrichtung und geeignet ist, eine Zone des Himmelskörpers (2) zu beobachten, die auf die Achse (21) der Reflektorvorrichtung (5) zentriert ist;
- und daß das Detektororgan (17) mindestens deutlich in der Achse (21) der Reflektorvorrichtung (5) plaziert ist, wenn die Reflektorvorrichtung (5) und die Empfängervorrichtung (6) in relativer Betriebsfunktion sind.

14. Satellit nach Anspruch 13, **dadurch gekennzeichnet, daß**, wenn die reflektierende Fläche (36) eine drehende Parabolform hat, das Verhältnis zwischen der Brennweite und dem Durchmesser der reflektierenden Fläche (36) über 5 beträgt.

15. Satellit nach einem beliebigen der vorstehenden Ansprüche 12 bis 14, **dadurch gekennzeichnet, daß** das Erfassungssystem (3) mindestens ein Filter (32) umfaßt, das Infrarot-Wärmestrahlen blockiert und so plaziert ist, daß das Detektororgan (17) vor den Infrarot-Wärmestrahlen geschützt wird, die von der Reflektorvorrichtung (5) kommen.

16. Satellit nach einem beliebigen der vorstehenden Ansprüche 1 bis 15, **dadurch gekennzeichnet, daß** er eine Stromversorgung mit photovoltaischen Zellen (18) umfaßt.

17. Satellit nach Anspruch 16, **dadurch gekennzeichnet, daß** photovoltaische Zellen (18) auf mindestens einer Fläche der Reflektorvorrichtung (5) angeordnet sind, die der/den reflektierenden Fläche(n) (36) gegenüberliegt.

18. Satellit nach Anspruch 17, **dadurch gekennzeichnet, daß** er mindestens eine leitende geschmeidige Versorgungsleitung (25) umfaßt mit einer größeren Länge als diejenige des mechanischen Verbindungssystems (19) im entfalteten Zustand, und die auf der Reflektorvorrichtung (5) angeordnete photovoltaische Zellen (18) elektrisch mit dem Empfängervorrichtung (6) verbindet.

19. Satellit nach Anspruch 18, **dadurch gekennzeichnet, daß**:

   - die Empfängervorrichtung (6) einen Träger (31) umfaßt, auf dem die Detektorvorrichtung (7) um eine Achse (16), die sogenannte Detektionsachse (16), drehend montiert ist;
   - die Detektorvorrichtung (7) eine motorbetriebene Vorrichtung zur Ausrichtung der Detektorvorrichtung um die Detektionsachse (16) herum umfaßt.

20. Satellit nach Anspruch 19, **dadurch gekennzeichnet, daß** die Empfängervorrichtung (6) eine elektromagnetische und/oder mechanische Hängevorrichtung (35) mit vernachlässigbarer Reibung der Detektorvorrichtung (7) gegenüber dem Träger (31) der Empfängervorrichtung (6) umfaßt.

21. Satellit nach einem beliebigen der vorstehenden Ansprüche 1 bis 20, **dadurch gekennzeichnet, daß** das Erfassungssystem (3) eine Vorrichtung umfaßt, die sogenannte Dämpfungs- oder Verstärkungsvorrichtung, die die Dämpfung oder die Verstärkung der Schwingungen des Satelliten (1) bei Nickschwingung und Schlingern ermöglicht, wenn die Reflektorvorrichtung (5) und die Empfängervorrichtung (6) in relativer Betriebsposition sind.

22. Satellit nach Anspruch 21, **dadurch gekennzeichnet, daß** die Dämpfungs- oder Verstärkungsvorrichtung einen Motor umfaßt, der geeignet ist, zumindest eine Masse die Detektionsachse (16) entlang hoch- und herunter zu fahren.

23. Satellit nach einem beliebigen der vorstehenden Ansprüche 1 bis 22, **dadurch gekennzeichnet, daß** er eine Fernmeßvorrichtung umfaßt, die geeignet ist, erfaßte Informationen an eine Empfangsstation in Entfernung vom Satelliten (1) zu übermitteln.

24. Satellit nach einem beliebigen der vorstehenden Ansprüche 1 bis 23, **dadurch gekennzeichnet, daß** das Erfassungssystem (3) eine Vorrichtung (27) zur provisorischen Befestigung der Empfängervorrichtung (6) an einer blinden Zone der reflektierenden Fläche (36) umfaßt, die ermöglicht, das Erfassungssystem (3) im zurückgezogenen Zustand zu halten.

25. Satellit nach einem beliebigen der vorstehenden Ansprüche 1 bis 24, **dadurch gekennzeichnet, daß** das Erfassungssystem (3) Mittel (39) umfaßt, die geeignet sind, ihn um eine Querachse des Erfassungssystem (3) drehen zu lassen, wenn die Reflektorvorrichtung (5) und die Empfängervorrichtung (6) in relativer Betriebsposition sind.

26. Satellit nach einem beliebigen der vorstehenden Ansprüche 1 bis 25, **dadurch gekennzeichnet, daß** die Reflektorvorrichtung (5) geeignet ist, damit die reflektierende Fläche (36) in weniger als einer halben Umdrehungsperiode um den Himmelskörper (2) ein geometrisches funktionelles Gleichgewicht erreicht, wenn die Reflektorvorrichtung (5) eine Wärmebelastung erleidet, die durch ihren Durchgang durch ein Segment der Umlaufbahn in Finsternis einer Wärmestrahlungsquelle (45) zu einem der besagten Quelle (45) ausgesetzten Segment der Umlaufbahn ausgesetzt wird.

27. Satellit nach einem beliebigen der vorstehenden Ansprüche 1 bis 26, **dadurch gekennzeichnet, daß** seine Masse unter 10 Kilogramm beträgt.

28. Satellit nach einem beliebigen der vorstehenden Ansprüche 1 bis 27, **dadurch gekennzeichnet, daß** er aus dem Erfassungssystem besteht.

29. Verfahren für die Beobachtung eines Himmelskörpers (2), bei dem:

   - mindestens ein Satellit (1) nach einem beliebigen der vorstehenden Ansprüche 1 bis 28 in die Umlaufbahn um diesen Himmelskörper gebracht wird;
   - man jeden Satelliten (1) sich selbst nach Schwerkraftgradient ausrichten läßt.

30. Verfahren nach Anspruch 29, **dadurch gekennzeichnet, daß** man in mindestens eine Umlaufbahn (8) eine Flotte (33) mehrerer Satelliten nach einem beliebigen der vorstehenden Ansprüche 1 bis 29 bringt.

**31.** Verfahren nach einem beliebigen der vorstehenden Ansprüche 29 oder 30, **dadurch gekennzeichnet, daß** jeder Satellit (1) in eine nicht geostationäre Umlaufbahn (8) gebracht wird, und **dadurch**, daß man eine geeignete Anzahl Satelliten (1) verwendet, die statistisch für die tägliche Erfassung von Beobachtungsinformationen auf allen Abschnitten von mindestens einer Abdeckungszone des Himmelskörpers (2) durch Sättigungseffekt geeignet sind.

**32.** Verfahren nach einem beliebigen der vorstehenden Ansprüche 29 bis 31, **dadurch gekennzeichnet, daß** man jeden Satelliten (1) eine natürliche Umlaufbahn (8) ohne aktive Korrektur dieser Umlaufbahn (8) beschreiben läßt.

**33.** Verfahren nach einem beliebigen der vorstehenden Ansprüche 29 bis 32, **dadurch gekennzeichnet, daß** man mindestens eine Trägerrakete (10) verwendet, in der mehrere Satelliten (1) einer Flotte (33) von Satelliten (1) zusammengefaßt werden, um sie in die Umlaufbahn um den Himmelskörper (2) zu bringen.

**34.** Verfahren nach Anspruch 33, **dadurch gekennzeichnet, daß**:

   - die Reflektorvorrichtungen (5) der besagten Satelliten (1) in einem Stapel (46) auf einer Platte (30) einer Trägerrakete (10) ineinandergesteckt sind;
   - die Empfängervorrichtungen (6) der besagten Satelliten (1) auf die Platte (30) um den Stapel (46) herum plaziert sind, wobei jede von ihnen auf einer Auswurfvorrichtung (42) plaziert ist, die geeignet ist, sie beim Bringen in die Umlaufbahn aus der Trägerrakete (10) zu werfen.

**35.** Flotte (33) mit Beobachtungssatelliten nach einem beliebigen der vorstehenden Ansprüche 1 bis 28, die in mindestens eine Umlaufbahn (8) um einen Himmelskörper (2) gebracht wird.

**36.** Flotte (33) nach Anspruch 35, **dadurch gekennzeichnet, daß** die Satelliten (1) in mindestens eine nicht geostationäre Umlaufbahn gebracht werden, und **dadurch**, daß die Flotte (33) eine geeignete Anzahl Satelliten (1) umfaßt, damit statistisch die tägliche Erfassung von Informationen über alle Abschnitte von mindestens einer Abdeckungszone des Himmelskörpers (2) durch Sättigungseffekt möglich ist.

Fig 1

EP 1 740 457 B1

Fig 2

45

5

1

3

25

9

19

6

43

8

2

54

27

Fig 3

Fig 4

Fig 5

Fig 6

5    21 14,14a
1    14,14b
Fig 7
13
16
15
6    17

Fig 8

Fig 9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3521290 A
- WO 02084361 A
- FR 2795135